# EUROPEAN PATENT APPLICATION

(11) **EP 4 697 669 A1**
(43) Date of publication of application: **18.02.2026**
(21) Application number: 23934418.7
(22) Date of filing: 25.04.2023
(51) Int. Cl.: H04L 45/00

(54) **DATA SERVICE TRANSMISSION METHOD, APPARATUS AND SYSTEM**

(71) Applicant: Huawei Technologies Co., Ltd., Shenzhen, Guangdong 518129 (CN)
(72) Inventor: XI, Yan, Shenzhen, Guangdong 518129 (CN); YAN, Xueqiang, Shenzhen, Guangdong 518129 (CN); ZHAO, Mingyu, Shenzhen, Guangdong 518129 (CN)
(74) Representative: Maiwald GmbH
(86) International application number: PCT/CN2023/090540
(87) International publication number: WO 2024/221213

(57) **Abstract**

A transmission method, apparatus, and system for a data service are provided. The method includes: A first apparatus generates a transmission path message, where the transmission path message includes cascaded at least one first message, the first message indicates a node on a transmission path, and the node is configured to implement a related function of the data service. The first apparatus sends the transmission path message to a first node, where the first node is a node indicated by a 1^{st} first message in the cascaded at least one first message. In the technical solutions provided in this application, the data service can be implemented based on a node on a communication path.

## Description

### TECHNICAL FIELD

Embodiments of this application relate to the communication field, and in particular, to a transmission method, apparatus, and system for a data service.

### BACKGROUND

Data is generated, flowed, and consumed in communication networks. With development of a network scale, new technologies, applications, and the like, data in the networks becomes more, and also more important. Efficient use of the data needs a complete service architecture. Data services may be used to perform operations such as collection, processing, analysis, and the like on the data. In this way, the data is provided as a service product.

Currently, a communication path needs to be established for message exchange between network nodes. Nodes on the communication path are responsible only for forwarding data packets without processing the data packets. Consequently, data service requirements cannot be met. Therefore, how to determine a communication path of a data service and implement transmission of the data service is still to be studied.

### SUMMARY

Embodiments of this application provide a transmission method, apparatus, and system for a data service, to implement the data service based on a node on a communication path.

According to a first aspect, a transmission method for a data service is provided. The method may be performed by a first apparatus. The first apparatus may be a functional network element in a network, may be a chip or a circuit in a network device or a core network device, or may be a logical module or software that can implement all or some functions of the network device or the core network device. This is not limited in this application.

The transmission method of the data service includes: The first apparatus generates a transmission path message, where the transmission path message includes cascaded at least one first message, the first message indicates a node on a transmission path, and the node is configured to implement a related function of the data service. The first apparatus sends the transmission path message to a first node, where the first node is a node indicated by a 1^{st} first message in the cascaded at least one first message.

In the foregoing solution, the transmission path message includes the cascaded at least one first message, and may indicate each node on the transmission path and a transmission sequence. The first apparatus sends the transmission path message to a 1^{st} node, so that each node on the transmission path can perform transmission of a data packet based on the transmission sequence, and perform related function processing of the data service on the data packet, to implement the data service.

With reference to the first aspect, in some implementations of the first aspect, the related function of the data service includes one or more of the following: data collection, data preprocessing, data storage, data analysis, data security and privacy protection, data multicast, and a data service interface.

With reference to the first aspect, in some implementations of the first aspect, the first message includes a first identification message and a first function message, the first identification message indicates the node, and the first function message indicates the related function that is of the data service and that is to be executed by the node.

Based on the foregoing solution, the first message includes the first identification message indicating the node and the first function message indicating the related function that is of the data service and that is to be executed by the node. The first apparatus configures a first identification message and a first function message of each node in a corresponding first message, so that each node can obtain the first function message from the corresponding first message, to determine a to-be-executed related function of the data service, and can obtain a first identification message of a next node from a next first message, to determine the next node.

With reference to the first aspect, in some implementations of the first aspect, the first message further includes a parameter message associated with the first function message.

Based on the foregoing solution, the first message further includes the parameter message associated with the first function message. The first apparatus configures, in the corresponding first message, a parameter message associated with the first function message of each node, so that each node can further obtain, from the corresponding first message, the parameter message associated with the first function message, to determine a parameter that needs to be used in a process of executing the related function of the data service.

With reference to the first aspect, in some implementations of the first aspect, before the first apparatus generates the transmission path message, the method further includes: The first apparatus receives a first reporting message from a second node in the network, where the first reporting message includes a second identification message and a second function message, the second identification message indicates the second node, and the second function message indicates a related function that is of the data service and that is supported by the second node. The first apparatus sends a first response message to the second node, where the first response message is used to acknowledge the first reporting message.

Based on the foregoing solution, each node in the network may send a first reporting message to the first apparatus in advance, so that the first apparatus knows an identification message and a support function message of each node, to flexibly select, from nodes based on a data service request and a capability of each node, a node configured to implement the data service, and dynamically configure the transmission path message. In addition, the first apparatus may acknowledge, by using a first response message, that the first reporting message has been known, to avoid a resource waste caused when the node reports a message again.

With reference to the first aspect, in some implementations of the first aspect, before the first apparatus generates the transmission path message, the method further includes: The first apparatus receives a second reporting message from a second node in the network, where the second reporting message includes a second function message, and the second function message indicates a related function that is of the data service and that is supported by the second node. The first apparatus sends a second response message to the second node, where the second response message includes an identification message allocated to the second node.

Based on the foregoing solution, each node in the network may send a second reporting message to the first apparatus in advance, so that the first apparatus knows a support function message of each node, to flexibly select, from nodes based on a data service request and a capability of each node, a node configured to implement the data service, and dynamically configure the transmission path message. In addition, the first apparatus may acknowledge, by using a second response message, that the second reporting message has been known, to avoid a resource waste caused when the node reports a message again, and allocate an identification message to the node.

With reference to the first aspect, in some implementations of the first aspect, the first message includes a network address of the node.

Based on the foregoing solution, the first message includes the network address of the node. The first apparatus configures a network address of each node in a corresponding first message, so that each node can obtain a network address of a next node from a next first message, to determine the next node.

With reference to the first aspect, in some implementations of the first aspect, before the first apparatus generates the transmission path message, the method further includes: The first apparatus receives a second reporting message from a second node in the network, where the second reporting message includes a second function message, and the second function message indicates a related function that is of the data service and that is supported by the second node. The first apparatus sends a third response message to the second node, where the third response message is used to acknowledge the second reporting message.

Based on the foregoing solution, each node in the network may send a second reporting message to the first apparatus in advance, so that the first apparatus knows a support function message of each node, to flexibly select, from nodes based on a data service request and a capability of each node, a node configured to implement the data service, and dynamically configure the transmission path message. In addition, the first apparatus may acknowledge, by using a third response message, that the second reporting message has been known, to avoid a resource waste caused when the node reports a message again.

With reference to the first aspect, in some implementations of the first aspect, the method further includes: The first apparatus sends a first function message to each node, where the first function message indicates a related function that is of the data service and that is to be executed by the node.

Based on the foregoing solution, after the data service is started, the first apparatus may send the first function message to each node, to indicate the related function that is of the data service and that is to be executed by each node. The first function message may be further associated with a data service message, and each node may further obtain the associated first function message based on the data service message, to determine the to-be-executed related function of the data service.

With reference to the first aspect, in some implementations of the first aspect, when there is a first message indicating a multicast node, the transmission path message further includes a second message, and the second message indicates a plurality of target nodes associated with the multicast node.

Based on the foregoing solution, the transmission path message further includes the second message, and may indicate the plurality of target nodes associated with the multicast node on the transmission path. The first apparatus may configure a message about the plurality of target nodes in the second message, so that the multicast node can determine the plurality of target nodes based on the second message.

With reference to the first aspect, in some implementations of the first aspect, the second message includes a plurality of third messages, and the third message indicates one of the plurality of target nodes.

With reference to the first aspect, in some implementations of the first aspect, the third message includes a third identification message and a third function message, the third identification message indicates the target node, and the third function message indicates a related function that is of the data service and that is to be executed by the target node.

With reference to the first aspect, in some implementations of the first aspect, the third message includes a network address of the target node.

With reference to the first aspect, in some implementations of the first aspect, the transmission path message includes an internet protocol version 6 IPv6 segment routing header, the segment routing header includes at least one segment identifier, the segment identifier includes a first field and a second field, the first field indicates a node on the transmission path, and the second field indicates a related function that is of the data service and that is to be executed by the node.

With reference to the first aspect, in some implementations of the first aspect, the segment identifier further includes a third field, and the third field indicates a parameter that needs to be used in a process in which the node executes the related function of the data service.

Based on the foregoing solution, in the segment identifier (segment ID, SID) of the internet protocol version 6 (internet protocol version 6, IPv6) segment routing header (segment routing header, SRH), a message indicating the node on the transmission path and the related function that is of the data service and that is to be executed by the node is configured, and the transmission path message is carried by using the SRH, so that transmission path planning can be conveniently and flexibly implemented.

With reference to the first aspect, in some implementations of the first aspect, the first apparatus is a data orchestration apparatus.

According to a second aspect, a transmission method for a data service is provided. The method may be performed by a second apparatus. The second apparatus may be a functional network element in a network, may be a chip or a circuit in a terminal device, a network device, a core network device, or an operations, administration, and maintenance device, or may be a logical module or software that can implement all or some functions of the terminal device, the network device, the core network device, or the operations, administration, and maintenance device. This is not limited in this application.

The transmission method of the data service includes: The second apparatus obtains a first data packet, where the first data packet includes a transmission path message, the transmission path message includes cascaded at least one first message, the first message indicates a node on a transmission path, and the node is configured to implement a related function of the data service. The second apparatus executes a related function of the data service, and generates a second data packet. The second apparatus sends the second data packet to a next node, where the second data packet includes the transmission path message.

In the foregoing solution, the transmission path message includes the cascaded at least one first message, and may indicate each node on the transmission path and a transmission sequence. After obtaining a data packet, each node on the transmission path may perform related function processing of the data service on the data packet, and may transmit processed data to a next node based on the transmission path message carried in the data packet. Therefore, in this solution, in a data packet transmission process, the data packet may be processed by the node on the transmission path, so that the data service can be implemented.

With reference to the second aspect, in some implementations of the second aspect, the related function of the data service includes one or more of the following: data collection, data preprocessing, data storage, data analysis, data security and privacy protection, data multicast, and a data service interface.

With reference to the second aspect, in some implementations of the second aspect, that the second apparatus obtains the first data packet includes: The second apparatus receives the transmission path message from a first apparatus, and obtains the first data packet based on service data and the transmission path message.

Based on the foregoing solution, the second apparatus is a 1^{st} node on the transmission path. The first apparatus sends the transmission path message to the second apparatus. The second apparatus may obtain the service data, and generate the first data packet based on the service data and the transmission path message.

With reference to the second aspect, in some implementations of the second aspect, that the second apparatus obtains the first data packet includes: The second apparatus receives the first data packet from a previous node.

Based on the foregoing solution, the second apparatus is a node other than a 1^{st} node on the transmission path. The previous node of the second apparatus may generate the first data packet based on data obtained by processing by the previous node and the transmission path message, and send the first data packet to the second apparatus, so that the second apparatus obtains the first data packet.

With reference to the second aspect, in some implementations of the second aspect, the first message includes a first identification message and a first function message, the first identification message indicates the node, and the first function message indicates the related function that is of the data service and that is to be executed by the node.

With reference to the second aspect, in some implementations of the second aspect, the first message further includes a parameter message associated with the first function message.

With reference to the second aspect, in some implementations of the second aspect, before the second apparatus obtains the first data packet, the method further includes: The second apparatus sends a first reporting message to the first apparatus, where the first reporting message includes a second identification message and a second function message, the second identification message indicates the second apparatus, and the second function message indicates a related function that is of the data service and that is supported by the second apparatus. The second apparatus receives a first response message from the first apparatus, where the first response message is used to acknowledge the first reporting message.

With reference to the second aspect, in some implementations of the second aspect, before the second apparatus obtains the first data packet, the method further includes: The second apparatus sends a second reporting message to the first apparatus, where the second reporting message includes a second function message, and the second function message indicates a related function that is of the data service and that is supported by the second apparatus. The second apparatus receives a second response message from the first apparatus, where the second response message includes an identification message allocated to the second apparatus.

With reference to the second aspect, in some implementations of the second aspect, that the second apparatus executes the related function of the data service includes: The second apparatus obtains the first function message based on the cascaded at least one first message. The second apparatus executes the related function that is of the data service and that is indicated by the first function message.

Based on the foregoing solution, the first apparatus configures the first function message of the second apparatus in a corresponding first message, and the second apparatus may obtain the first function message from the corresponding first message, to execute the related function that is of the data service and that is indicated by the first function message.

With reference to the second aspect, in some implementations of the second aspect, the first message includes a network address of the node.

With reference to the second aspect, in some implementations of the second aspect, before the second apparatus obtains the first data packet, the method further includes: The second apparatus sends a second reporting message to the first apparatus, where the second reporting message includes a second function message, and the second function message indicates a related function that is of the data service and that is supported by the second apparatus. The second apparatus receives a third response message from the first apparatus, where the third response message is used to acknowledge the second reporting message.

With reference to the second aspect, in some implementations of the second aspect, that the second apparatus executes the related function of the data service includes: The second apparatus receives a first function message from the first apparatus, where the first function message indicates the related function that is of the data service and that is to be executed by the second apparatus. The second apparatus executes the related function that is of the data service and that is indicated by the first function message.

Based on the foregoing solution, the first apparatus may send the first function message to the second apparatus, and the second apparatus may determine the to-be-executed related function of the data service based on the received first function message, to execute the related function that is of the data service and that is indicated by the first function message.

With reference to the second aspect, in some implementations of the second aspect, when there is a first message indicating a multicast node, the transmission path message further includes a second message, and the second message indicates a plurality of target nodes associated with the multicast node.

With reference to the second aspect, in some implementations of the second aspect, the second message includes a plurality of third messages, and the third message indicates one of the plurality of target nodes.

With reference to the second aspect, in some implementations of the second aspect, the third message includes a third identification message and a third function message, the third identification message indicates the target node, and the third function message indicates a related function that is of the data service and that is to be executed by the target node.

With reference to the second aspect, in some implementations of the second aspect, the third message includes a network address of the target node.

With reference to the second aspect, in some implementations of the second aspect, when the second apparatus is a multicast node, that the second apparatus executes the related function of the data service includes: The second apparatus obtains a plurality of associated target nodes based on the second message. That the second apparatus sends the second data packet to the next node includes: The second apparatus sends the second data packet to each of the plurality of target nodes.

Based on the foregoing solution, the first apparatus configures, in the second message, a message about the plurality of target nodes associated with the multicast node. When the second apparatus is the multicast node, the second apparatus may determine the plurality of target nodes based on the second message, and send the second data packet to each target node.

With reference to the second aspect, in some implementations of the second aspect, the transmission path message includes an internet protocol version 6 IPv6 segment routing header, the segment routing header includes at least one segment identifier, the segment identifier includes a first field and a second field, the first field indicates a node on the transmission path, and the second field indicates a related function that is of the data service and that is to be executed by the node.

With reference to the second aspect, in some implementations of the second aspect, the segment identifier further includes a third field, and the third field indicates a parameter that needs to be used in a process in which the node executes the related function of the data service.

With reference to the second aspect, in some implementations of the second aspect, the second apparatus is a data processing apparatus.

For beneficial effects of implementations whose beneficial effects are not described in the second aspect, refer to descriptions of beneficial effects in corresponding implementations of the first aspect. Details are not described herein again.

According to a third aspect, a transmission apparatus for a data service is provided. The data transmission apparatus is a first apparatus. The first apparatus may be a functional network element in a network, may be a chip or a circuit in a network device or a core network device, or may be a logical module or software that can implement all or some functions of the network device or the core network device. This is not limited in this application.

The transmission apparatus of the data service includes a processing unit and a transceiver unit. The processing unit is configured to generate a transmission path message, where the transmission path message includes cascaded at least one first message, the first message indicates a node on a transmission path, and the node is configured to implement a related function of the data service. The transceiver unit is configured to send the transmission path message to a first node, where the first node is a node indicated by a 1^{st} first message in the cascaded at least one first message.

With reference to the third aspect, in some implementations of the third aspect, the related function of the data service includes one or more of the following: data collection, data preprocessing, data storage, data analysis, data security and privacy protection, data multicast, and a data service interface.

With reference to the third aspect, in some implementations of the third aspect, the first message includes a first identification message and a first function message, the first identification message indicates the node, and the first function message indicates the related function that is of the data service and that is to be executed by the node.

With reference to the third aspect, in some implementations of the third aspect, the first message further includes a parameter message associated with the first function message.

With reference to the third aspect, in some implementations of the third aspect, before the processing unit generates the transmission path message, the transceiver unit is further configured to: receive a first reporting message from a second node in the network, where the first reporting message includes a second identification message and a second function message, the second identification message indicates the second node, and the second function message indicates a related function that is of the data service and that is supported by the second node; and send a first response message to the second node, where the first response message is used to acknowledge the first reporting message.

With reference to the third aspect, in some implementations of the third aspect, before the processing unit generates the transmission path message, the transceiver unit is further configured to: receive a second reporting message from a second node in the network, where the second reporting message includes a second function message, and the second function message indicates a related function that is of the data service and that is supported by the second node; and send a second response message to the second node, where the second response message includes an identification message allocated to the second node.

With reference to the third aspect, in some implementations of the third aspect, the first message includes a network address of the node.

With reference to the third aspect, in some implementations of the third aspect, before the processing unit generates the transmission path message, the transceiver unit is further configured to: receive a second reporting message from a second node in the network, where the second reporting message includes a second function message, and the second function message indicates a related function that is of the data service and that is supported by the second node; and send a third response message to the second node, where the third response message is used to acknowledge the second reporting message.

With reference to the third aspect, in some implementations of the third aspect, the transceiver unit is further configured to send a first function message to each node, where the first function message indicates a related function that is of the data service and that is to be executed by the node.

With reference to the third aspect, in some implementations of the third aspect, when there is a first message indicating a multicast node, the transmission path message further includes a second message, and the second message indicates a plurality of target nodes associated with the multicast node.

With reference to the third aspect, in some implementations of the third aspect, the second message includes a plurality of third messages, and the third message indicates one of the plurality of target nodes.

With reference to the third aspect, in some implementations of the third aspect, the third message includes a third identification message and a third function message, the third identification message indicates the target node, and the third function message indicates a related function that is of the data service and that is to be executed by the target node.

With reference to the third aspect, in some implementations of the third aspect, the third message includes a network address of the target node.

With reference to the third aspect, in some implementations of the third aspect, the transmission path message includes an internet protocol version 6 IPv6 segment routing header, the segment routing header includes at least one segment identifier, the segment identifier includes a first field and a second field, the first field indicates a node on the transmission path, and the second field indicates a related function that is of the data service and that is to be executed by the node.

With reference to the third aspect, in some implementations of the third aspect, the segment identifier further includes a third field, and the third field indicates a parameter that needs to be used in a process in which the node executes the related function of the data service.

According to a fourth aspect, a transmission apparatus for a data service is provided. The data transmission apparatus is a second apparatus. The second apparatus may be a functional network element in a network, may be a chip or a circuit in a terminal device, a network device, a core network device, or an operations, administration, and maintenance device, or may be a logical module or software that can implement all or some functions of the terminal device, the network device, the core network device, or the operations, administration, and maintenance device. This is not limited in this application.

The transmission apparatus of the data service includes a transceiver unit and a processing unit. The transceiver unit is configured to obtain a first data packet, where the first data packet includes a transmission path message, the transmission path message includes cascaded at least one first message, the first message indicates a node on a transmission path, and the node is configured to implement a related function of the data service. The processing unit is configured to: execute a related function of the data service, and generate a second data packet. The transceiver unit is further configured to send the second data packet to a next node, where the second data packet includes the transmission path message.

With reference to the fourth aspect, in some implementations of the fourth aspect, the related function of the data service includes one or more of the following: data collection, data preprocessing, data storage, data analysis, data security and privacy protection, data multicast, and a data service interface.

With reference to the fourth aspect, in some implementations of the fourth aspect, when obtaining the first data packet, the transceiver unit is specifically configured to: receive the transmission path message from a first apparatus, and obtain the first data packet based on service data and the transmission path message.

With reference to the fourth aspect, in some implementations of the fourth aspect, when obtaining the first data packet, the transceiver unit is specifically configured to receive the first data packet from a previous node.

With reference to the fourth aspect, in some implementations of the fourth aspect, the first message includes a first identification message and a first function message, the first identification message indicates the node, and the first function message indicates the related function that is of the data service and that is to be executed by the node.

With reference to the fourth aspect, in some implementations of the fourth aspect, the first message further includes a parameter message associated with the first function message.

With reference to the fourth aspect, in some implementations of the fourth aspect, before the transceiver unit obtains the first data packet, the transceiver unit is further configured to: send a first reporting message to the first apparatus, where the first reporting message includes a second identification message and a second function message, the second identification message indicates the second apparatus, and the second function message indicates a related function that is of the data service and that is supported by the second apparatus; and receive a first response message from the first apparatus, where the first response message is used to acknowledge the first reporting message.

With reference to the fourth aspect, in some implementations of the fourth aspect, before the transceiver unit obtains the first data packet, the transceiver unit is further configured to: send a second reporting message to the first apparatus, where the second reporting message includes a second function message, and the second function message indicates a related function that is of the data service and that is supported by the second apparatus; and receive a second response message from the first apparatus, where the second response message includes an identification message allocated to the second apparatus.

With reference to the fourth aspect, in some implementations of the fourth aspect, when executing the related function of the data service, the processing unit is specifically configured to: obtain the first function message based on the cascaded at least one first message, and execute the related function that is of the data service and that is indicated by the first function message.

With reference to the fourth aspect, in some implementations of the fourth aspect, the first message includes a network address of the node.

With reference to the fourth aspect, in some implementations of the fourth aspect, before the transceiver unit obtains the first data packet, the transceiver unit is further configured to: send a second reporting message to the first apparatus, where the second reporting message includes a second function message, and the second function message indicates a related function that is of the data service and that is supported by the second apparatus; and receive a third response message from the first apparatus, where the third response message is used to acknowledge the second reporting message.

With reference to the fourth aspect, in some implementations of the fourth aspect, the transceiver unit is further configured to receive first a function message from the first apparatus, where the first function message indicates the related function that is of the data service and that is to be executed by the second apparatus. When executing the related function of the data service, the processing unit is specifically configured to execute the related function that is of the data service and that is indicated by the first function message.

With reference to the fourth aspect, in some implementations of the fourth aspect, when there is a first message indicating a multicast node, the transmission path message further includes a second message, and the second message indicates a plurality of target nodes associated with the multicast node.

With reference to the fourth aspect, in some implementations of the fourth aspect, the second message includes a plurality of third messages, and the third message indicates one of the plurality of target nodes.

With reference to the fourth aspect, in some implementations of the fourth aspect, the third message includes a third identification message and a third function message, the third identification message indicates the target node, and the third function message indicates a related function that is of the data service and that is to be executed by the target node.

With reference to the fourth aspect, in some implementations of the fourth aspect, the third message includes a network address of the target node.

With reference to the fourth aspect, in some implementations of the fourth aspect, when the transmission apparatus of the data service is a multicast node, when executing the related function of the data service, the processing unit is specifically configured to obtain a plurality of associated target nodes based on the second message; and when sending the second data packet to the next node, the transceiver unit is specifically configured to send the second data packet to each of the plurality of target nodes.

With reference to the fourth aspect, in some implementations of the fourth aspect, the transmission path message includes an internet protocol version 6 IPv6 segment routing header, the segment routing header includes at least one segment identifier, the segment identifier includes a first field and a second field, the first field indicates a node on the transmission path, and the second field indicates a related function that is of the data service and that is to be executed by the node.

With reference to the fourth aspect, in some implementations of the fourth aspect, the segment identifier further includes a third field, and the third field indicates a parameter that needs to be used in a process in which the node executes the related function of the data service.

According to a fifth aspect, a transmission apparatus for a data service is provided. The apparatus includes a processor. The processor is coupled to a memory, and may be configured to execute instructions in the memory, to implement the method according to any one of the first aspect and the possible implementations of the first aspect. Optionally, the apparatus further includes the memory. The memory and the processor may be separately deployed, or may be deployed in a centralized manner. Optionally, the apparatus further includes a communication interface, and the processor is coupled to the communication interface.

In an implementation, the communication interface may be a transceiver or an input/output interface.

In another implementation, the apparatus is a first apparatus. The first apparatus may be a functional network element in a network, may be a chip or a circuit in a network device or a core network device, or may be a logical module or software that can implement all or some functions of the network device or the core network device. This is not limited in this application. When the apparatus is a chip, the communication interface may be an input/output interface, an interface circuit, an output circuit, an input circuit, a pin, a related circuit, or the like on the chip or a chip system. The processor may alternatively be embodied as a processing circuit or a logic circuit.

Optionally, the transceiver may be a transceiver circuit. Optionally, the input/output interface may be an input/output circuit.

In a specific implementation process, the processor may be one or more chips, the input circuit may be an input pin, the output circuit may be an output pin, and the processing circuit may be a transistor, a gate circuit, a trigger, any type of logic circuit, or the like. An input signal received by the input circuit may be received and input by, but not limited to, a receiver, a signal output by the output circuit may be output to, but not limited to, a transmitter and transmitted by the transmitter, and the input circuit and the output circuit may be a same circuit, where the circuit is used as the input circuit and the output circuit at different moments. Specific implementations of the processor and the circuits are not limited in this embodiment of this application.

According to a sixth aspect, a transmission apparatus for a data service is provided. The apparatus includes a processor. The processor is coupled to a memory, and may be configured to execute instructions in the memory, to implement the method according to any one of the second aspect and the possible implementations of the second aspect. Optionally, the apparatus further includes the memory. The memory and the processor may be separately deployed, or may be deployed in a centralized manner. Optionally, the apparatus further includes a communication interface, and the processor is coupled to the communication interface.

In an implementation, the communication interface may be a transceiver or an input/output interface.

In another implementation, the apparatus is a second apparatus. The second apparatus may be a functional network element in a network, may be a chip or a circuit in a terminal device, a network device, a core network device, or an operations, administration, and maintenance device, or may be a logical module or software that can implement all or some functions of the terminal device, the network device, the core network device, or the operations, administration, and maintenance device. This is not limited in this application. When the apparatus is a chip, the communication interface may be an input/output interface, an interface circuit, an output circuit, an input circuit, a pin, a related circuit, or the like on the chip or a chip system. The processor may alternatively be embodied as a processing circuit or a logic circuit.

Optionally, the transceiver may be a transceiver circuit. Optionally, the input/output interface may be an input/output circuit.

In a specific implementation process, the processor may be one or more chips, the input circuit may be an input pin, the output circuit may be an output pin, and the processing circuit may be a transistor, a gate circuit, a trigger, any type of logic circuit, or the like. An input signal received by the input circuit may be received and input by, but not limited to, a receiver, a signal output by the output circuit may be output to, but not limited to, a transmitter and transmitted by the transmitter, and the input circuit and the output circuit may be a same circuit, where the circuit is used as the input circuit and the output circuit at different moments. Specific implementations of the processor and the circuits are not limited in this embodiment of this application.

According to a seventh aspect, a transmission apparatus for a data service is provided. The apparatus includes a logic circuit and an input/output interface. The logic circuit is configured to: be coupled to the input/output interface, and perform data transmission through the input/output interface, to perform the method according to any one of the first aspect, the second aspect, and the possible implementations of the first aspect and the second aspect.

According to an eighth aspect, a transmission system for a data service is provided. The system includes a first apparatus and a second apparatus. The first apparatus is configured to perform the method according to any one of the first aspect and the possible implementations of the first aspect. The second apparatus is configured to perform the method according to any one of the second aspect and the possible implementations of the second aspect.

According to a ninth aspect, a computer-readable storage medium is provided. The computer-readable storage medium stores a computer program (which may also be referred to as code or instructions). When the computer program is run on a computer, the computer is enabled to perform the method according to any one of the first aspect, the second aspect, and the possible implementations of the first aspect and the second aspect.

According to a tenth aspect, a computer program product is provided. The computer program product includes a computer program (which may also be referred to as code or instructions). When the computer program is run, a computer is enabled to perform the method according to any one of the first aspect, the second aspect, and the possible implementations of the first aspect and the second aspect.

For beneficial effects brought by the third aspect to the tenth aspect, refer to descriptions of beneficial effects in the first aspect and the second aspect. Details are not described herein again.

### BRIEF DESCRIPTION OF DRAWINGS

FIG. 1 is a diagram of a network architecture according to an embodiment of this application;
FIG. 2 is an interaction flowchart of a transmission method for a data service according to an embodiment of this application;
FIG. 3 is an interaction flowchart of capability reporting according to an embodiment of this application;
FIG. 4 is another interaction flowchart of capability reporting according to an embodiment of this application;
FIG. 5 is another interaction flowchart of capability reporting according to an embodiment of this application;
FIG. 6 is a diagram of an IPv6 SRH according to an embodiment of this application;
FIG. 7 is an application diagram of a transmission method for a data service according to an embodiment of this application;
FIG. 8 is an application diagram of another transmission method for a data service according to an embodiment of this application;
FIG. 9 is an application diagram of another transmission method for a data service according to an embodiment of this application;
FIG. 10 is a diagram of a structure of a transmission apparatus for a data service according to an embodiment of this application;
FIG. 11 is a diagram of a structure of another transmission apparatus for a data service according to an embodiment of this application; and
FIG. 12 is a diagram of a structure of another transmission apparatus for a data service according to an embodiment of this application.

### DESCRIPTION OF EMBODIMENTS

In descriptions of this application, "/" indicates "or", unless otherwise specified. For example, A/B may indicate A or B. In this application, the term "and/or" describes only an association relationship between associated objects and indicates that three relationships may exist. For example, A and/or B may indicate the following three cases: Only A exists, both A and B exist, and only B exists. In addition, "at least one" may mean one or more, and "a plurality of" may mean two or more. The terms such as "first" and "second" do not limit a quantity and an execution sequence, and the terms such as "first" and "second" do not indicate a definite difference.

It should be noted that in this application, the term like "example" or "for example" is used to represent giving an example, an illustration, or a description. Any embodiment or design scheme described as an "example" or "for example" in this application should not be understood as being more preferred or having more advantages than another embodiment or design scheme. Exactly, use of the term like "example" or "for example" is intended to present a related concept in a specific manner.

In the descriptions of this application, an "indication" may include a direct indication and an indirect indication, or may include an explicit indication and an implicit indication. A message indicated by a message is referred to as a to-be-indicated message. In a specific implementation process, there are a plurality of manners of indicating the to-be-indicated message. For example, the to-be-indicated message may be directly indicated. For example, the to-be-indicated message, an index of the to-be-indicated message, or the like is indicated. For another example, the to-be-indicated message may alternatively be indirectly indicated by indicating another message, and there is an association relationship between the indicated another message and the to-be-indicated message. For another example, only a part of the to-be-indicated message may alternatively be indicated, and another part of the to-be-indicated message is known or pre-agreed on. In addition, a specific message may alternatively be indicated by using an arrangement sequence of various messages that is pre-agreed on (for example, stipulated in a protocol), to reduce indication overheads to some extent.

The following describes technical solutions in embodiments of this application with reference to the accompanying drawings.

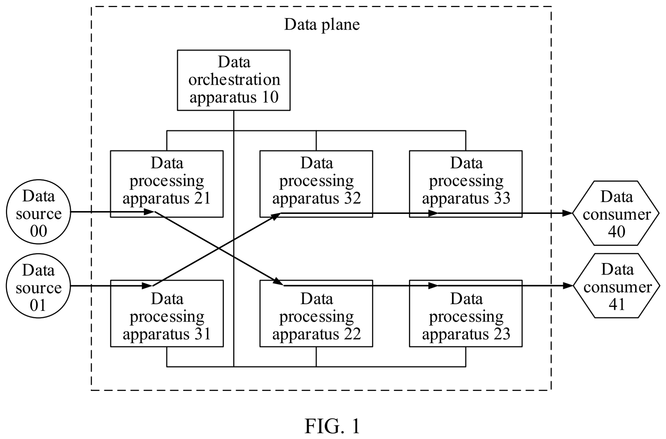

FIG. 1 is a diagram of a network architecture according to an embodiment of this application.

The network architecture shown in FIG. 1 includes a data source, a data plane, and a data consumer. The data source (for example, a data source 00 or a data source 01) may be an apparatus for generating service data. The data plane is used for data processing, for example, data collection, data storage, data preprocessing, data analysis, and a data service application programming interface (application programming interface, API), to implement a data service (data service, DS). The data consumer (for example, a data consumer 40 or a data consumer 41) may be an apparatus that uses processed data.

The data plane includes a data orchestration apparatus 10 and data processing apparatuses (for example, a data processing apparatus 21, a data processing apparatus 22, a data processing apparatus 23, a data processing apparatus 31, a data processing apparatus 32, and a data processing apparatus 33). A communication connection is established between the data orchestration apparatus 10 and each data processing apparatus, and between different data processing apparatuses, to perform data exchange through, for example, a bus.

The data processing apparatus may be a service data processing node. The data orchestration apparatus 10 may determine, based on a data service requirement, a data processing apparatus for implementing the data service, orchestrate functions of the data processing apparatuses, and establish a transmission path. Different data services may be related to different data processing apparatuses. Therefore, different data services may correspond to different transmission paths.

For example, FIG. 1 shows two transmission paths. A 1^{st} transmission path sequentially includes the data processing apparatus 21, the data processing apparatus 22, and the data processing apparatus 23 in a data transmission direction that are configured to: obtain the service data from the data source 00, process the service data, and provide processed data for the data consumer 41 to use. A 2^{nd} transmission path sequentially includes the data processing apparatus 31, the data processing apparatus 32, and the data processing apparatus 33 in a data transmission direction that are configured to: obtain the service data from the data source 01, process the service data, and provide processed data for the data consumer 40 to use.

For example, the data processing apparatus may be a data agent (data agent, DA) network element. The data processing apparatus may perform processing work such as collection, storage, preprocessing, and analysis on data. The data processing apparatus may be independently deployed, for example, deployed in a network in a form of a network function (network function, NF) or a network element. Alternatively, the data processing apparatus may be built in a network node, for example, built in a terminal device, an access network node, a core network (core network, CN) node, or an operations, administration, and maintenance (operations, administration, and maintenance, OAM) node. When the data processing apparatus is not independently deployed, the data processing apparatus may be combined with an existing function of the foregoing node to implement a data processing function. Alternatively, the data processing apparatus may be evolved from the foregoing node. For example, the data processing apparatus is evolved from a network data analytics function (network data analytics function, NWDAF), and can implement an existing function of the NWDAF, a scenario use case implemented based on the NWDAF, and the like. This is not limited in this application.

For example, the data orchestration apparatus may be a data orchestration network element (data orchestrator, DO) or a data control network element (data controller, DC). The data orchestration apparatus may receive a data service request (for example, data collection, federated learning, or distributed learning) from an application, determine a data processing apparatus based on the data service request, and dynamically establish an end-to-end (end-to-end, E2E) overlay (overlay) topology (topology) network. The overlay topology network is a data processing network, a node (namely, a data processing apparatus) in the network is a data processing node, and data flows in the network. The data orchestration apparatus may further feed back a response to the data service request to the application, for example, feed back, to the application, that the overlay topology network has been established. The data orchestration apparatus may be independently deployed, for example, deployed in a network in a form of an NF or a network element. Alternatively, the data orchestration apparatus may be built in a network node, for example, built in an access network node or a CN node. This is not limited in this application.

It may be understood that the overlay network is relative to an underlay (underlay) network, and is a logical network established on the underlay network. One or more virtual logical networks may be constructed on a same underlay network by using a network virtualization technology. Different overlay networks can share devices and lines in the underlay network, but services in the overlay networks can be decoupled from physical networking and interconnection technologies in the underlay network.

Optionally, the data plane further includes a trust anchor (trust anchor, TA). The TA may provide trust services such as authentication, authorization, and access control (authentication, authorization, and access control, AAA), and may further store data that cannot be tampered with, to protect the data from being attacked.

Optionally, the data plane further includes a data storage function (data storage function, DSF) network element. When a large amount of data needs to be stored, or when data needs to be stored for a long time, the DSF may be used as a storage extension of the data processing apparatus.

It may be understood that names (for example, the data orchestration apparatus, the data processing apparatus, the DO, the DC, and the DA) shown in the foregoing descriptions or FIG. 1 are merely examples. The foregoing apparatuses may alternatively have other names. This is not limited in this application.

The network architecture shown in FIG. 1 is applicable to a transmission method for a data service provided in embodiments of this application. The transmission method of the data service provided in embodiments of this application may relate to only some apparatuses or communication nodes shown in FIG. 1, or may relate to an apparatus or a communication node that is not shown in FIG. 1. This is not limited in this application.

It may be understood that the foregoing network architecture is an example for description, and a network architecture applicable to embodiments of this application is not limited thereto. Any network architecture that can implement functions of some or all of the foregoing devices is applicable to embodiments of this application.

In the foregoing descriptions, the terminal device may be a wireless terminal device that can receive scheduling and indication messages of a network device. The terminal device may be a device that provides a user with voice and/or data connectivity, a handheld device with a wireless connection function, or another processing device connected to a wireless modem.

The terminal device may also be referred to as a terminal, an access terminal, a subscriber unit, user equipment (user equipment, UE), a subscriber station, a mobile station, a remote station, a remote terminal, a mobile device, a user terminal, a wireless communication device, a user agent, or a user apparatus. The terminal device is a device that includes a wireless communication function (providing the user with the voice/data connectivity), for example, a handheld device or a vehicle-mounted device with a wireless connection function. The terminal device in embodiments of this application may be a mobile phone (mobile phone), a tablet computer (pad), a computer with a wireless transceiver function, a train, an airplane, a mobile internet device (mobile internet device, MID), a virtual reality (virtual reality, VR) terminal, an augmented reality (augmented reality, AR) terminal, a wireless terminal (for example, a robot) in industrial control (industrial control), a wireless terminal (for example, a vehicle-mounted device, a vehicle device, a vehicle-mounted module, or a vehicle) in the internet of vehicles, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a terminal in a 5th generation (5th generation, 5G) network, a terminal in a future evolved network, or the like.

The wearable device may also be referred to as a wearable intelligent device, and is a general term for wearable devices, such as glasses, gloves, watches, clothes, and shoes, that are developed by applying wearable technologies to intelligent designs of daily wear. The wearable device is a portable device that is directly worn on a body or integrated into clothes or an accessory of a user. The wearable device is not only a hardware device, but also implements a powerful function through software support, data exchange, and cloud interaction. In a broad sense, the wearable intelligent device includes a full-featured and large-sized device that can implement all or some functions without depending on a smartphone, for example, a smart watch or smart glasses, and includes devices that are dedicated to only one type of application function and need to collaboratively work with other devices such as smartphones, for example, various smart bands or smart jewelry for monitoring physical signs.

The access network node may be a device in a wireless network. For example, the access network node may be a device that is deployed in a radio access network and that provides a wireless communication function for the terminal device. For another example, the access network node may be a radio access network (radio access network, RAN) node that connects the terminal device to the wireless network, and may also be referred to as an access network device.

The access network node includes but is not limited to: a base station, a next generation NodeB (next generation NodeB, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, HeNB, or home NodeB, HNB), a baseband unit (baseband unit, BBU), a server, a wearable device, a vehicle-mounted device, or an access point (access point, AP), a wireless relay node, a wireless backhaul node, a transmission point (transmission point, TP), a transmission reception point (transmission reception point, TRP), or the like in a wireless fidelity (wireless fidelity, Wi-Fi) system; or may be a gNB, a TRP, or a TP in a 5G system, for example, a new radio (new radio, NR) system, or one antenna panel or one group of antenna panels of a base station in the 5G system; or may be a network node that forms a gNB or a transmission point, for example, a baseband unit (BBU) or a distributed unit (distributed unit, DU). The base station may be a macro base station, a micro base station, a picocell base station, a small cell, a relay station, a balloon station, or the like.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a media access control (media access control, MAC) layer, and a physical (physical, PHY) layer. The AAU implements some physical layer processing functions, radio frequency processing, and a function related to an active antenna. A message at the RRC layer is generated by the CU, and is finally encapsulated at the PHY layer of the DU into a message at the PHY layer, or is transformed from a message at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified as a network device in an access network (radio access network, RAN), or the CU may be classified as a network device in a core network (core network, CN). This is not limited in this application.

The technical solutions in embodiments of this application may be applied to various communication systems, for example, a long term evolution (long term evolution, LTE) system; a long term evolution advanced (LTE advanced, LTE-A) system; an LTE frequency division duplex (frequency division duplex, FDD) system; an LTE time division duplex (time division duplex, TDD) system; a wireless fidelity (wireless fidelity, Wi-Fi) communication system; a universal mobile telecommunications system (universal mobile telecommunications system, UMTS); a worldwide interoperability for microwave access (worldwide interoperability for microwave access, WiMAX) communication system; a 5th generation (5th Generation, 5G) system; a future evolved communication system, for example, a 6th generation (6th Generation, 6G) mobile communication system; a vehicle-to-everything (vehicle-to-everything, V2X) communication system, where V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), and the like; a long term evolution-vehicle (long term evolution-vehicle, LTE-V) communication system; an internet of vehicles communication system; a machine type communication (machine type communication, MTC) system; an internet of things (Internet of things, IoT) communication system; a long term evolution-machine (long term evolution-machine, LTE-M) communication system; a machine-to-machine (machine-to-machine, M2M) communication system; and the like.

The following describes the transmission method of the data service provided in this application.

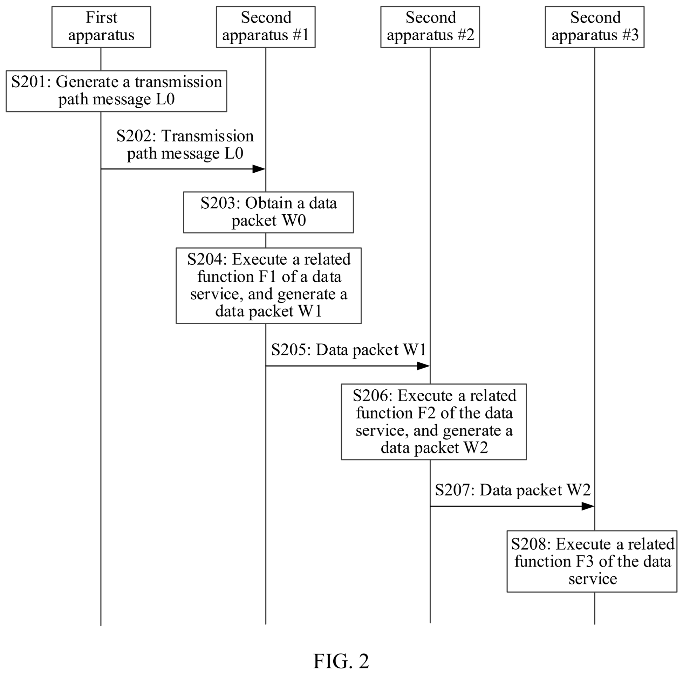

FIG. 2 is an interaction flowchart of a transmission method for a data service according to an embodiment of this application. The transmission method of the data service shown in FIG. 2 includes the following steps S201 to S208.

S201: A first apparatus generates a transmission path message, where the transmission path message includes cascaded (cascaded) at least one first message, the first message indicates a node on a transmission path, and the node is configured to implement a related function of the data service.

The first apparatus may receive a data service request, and generate a corresponding transmission path message based on the data service request, where the transmission path message indicates a transmission path. It may be understood that the transmission path message is associated with the data service, and transmission path messages corresponding to different data services may be different or the same.

One data service may include one or more related functions, each related function of the data service may be completed by one or more nodes, and each node may execute one or more related functions of the data service.

The related function of the data service may include but is not limited to data collection, data preprocessing, data storage, data analysis, data security and privacy protection, data multicast, and a data service interface. The data collection may include data collection at intervals, batch data collection, streaming data collection, and the like. The data preprocessing may include data cleaning, data filtering, data fusion, data redundancy removal, data convergence, and the like. The data storage may include centralized storage, distributed storage, storage extension, on-chain storage, and the like. The data analysis may include big data analysis, model training, model inference, a knowledge graph, federated learning, and the like. The data security and privacy protection may include differential privacy, homomorphic encryption, multi-party computation, zero-knowledge proof, and the like. The data multicast means multicasting data to a plurality of target nodes. The data service interface is an interface used by a data consumer to obtain processed data.

In some examples, the transmission path message may include a cascaded plurality of first messages, that is, there are a cascaded plurality of nodes on the transmission path. Each node may complete some related functions of the data service, and the cascaded plurality of nodes jointly implement the data service. The cascaded plurality of nodes may be understood as that the plurality of nodes are arranged in a sequence, and an output of a former node is an input of a latter node.

In some other examples, the transmission path message may include one first message, that is, there is only one node on the transmission path. In other words, all related functions of the data service may be completed by one node, to implement the data service.

In an example in FIG. 2, the transmission path includes three nodes (the nodes are also referred to as second apparatuses): a second apparatus #1, a second apparatus #2, and a second apparatus #3. The transmission path message generated by the first apparatus is denoted as a transmission path message L0. The transmission path message L0 includes cascaded three first messages, to indicate the second apparatus #1, the second apparatus #2, and the second apparatus #3 respectively. It should be understood that FIG. 2 is merely an example. In this example, the transmission path includes the three second apparatuses. In actual deployment, the transmission path may include one, two, or more second apparatuses. A quantity of second apparatuses on the transmission path and a related function that is of the data service and that is to be completed by each second apparatus are not limited in this application.

For example, the first apparatus may be the data orchestration apparatus shown in FIG. 1, and the second apparatus may be the data processing apparatus shown in FIG. 1.

Optionally, the first apparatus converts the data service request into a data pipeline (data pipeline, DP) construction request. One data pipeline may be understood as one transmission path (for example, the 1^{st} transmission path or the 2^{nd} transmission path shown in FIG. 1), and a node in the data pipeline may be understood as a node on the transmission path. A node included in the data pipeline and a related function that is of the data service and that is to be executed by each node are determined by the first apparatus. For example, the first apparatus may establish a data pipeline based on the data service request and a capability of each node. After the data pipeline is established, a node in the data pipeline and a related function that is of the data service and that is to be executed by each node are determined. Data flows in the data pipeline, and a corresponding related function of the data service is completed at a node that the data flows through.

S202: The first apparatus sends the transmission path message L0 to the second apparatus #1, and correspondingly, the second apparatus #1 receives the transmission path message L0 from the first apparatus.

The second apparatus #1 is a 1^{st} node on the transmission path, and may also be referred to as an ingress node (ingress node). For example, the second apparatus #1 may be the data processing apparatus 21 on the 1^{st} transmission path or the data processing apparatus 31 on the 2^{nd} transmission path shown in FIG. 1.

S203: The second apparatus #1 obtains a data packet WO.

For example, the second apparatus #1 may obtain service data from a data source (for example, the data source 00 or the data source 01 shown in FIG. 1), and obtain the data packet WO based on the service data and the transmission path message L0. The data packet WO includes a data payload P0 and the transmission path message L0. The data payload P0 is the service data obtained from the data source. For example, after the service data is encapsulated into the data packet WO, the service data is denoted as the data payload P0.

S204: The second apparatus #1 executes a related function F1 of the data service, and generates a data packet W1.

The related function F1 of the data service is a related function that is of the data service and that is to be executed by the second apparatus #1. The second apparatus #1 executes the related function F1 of the data service on the data payload P0, to obtain a data payload P1, and generates the data packet W1 based on the data payload P1 and the transmission path message L0. The data packet W1 includes the data payload P1 and a transmission path message L1. It should be understood that the data payload P1 is different from the data payload P0.

In an example, the transmission path message L1 may be the same as the transmission path message L0. For example, the transmission path message L0 includes a first message a, a first message b, and a first message c, to indicate the second apparatus #1, the second apparatus #2, and the second apparatus #3 respectively. The transmission path message L1 is the same as the transmission path message L0. In other words, the transmission path message L0 includes the first message a, the first message b, and the first message c.

In another example, the transmission path message L1 may be different from the transmission path message L0. For example, the transmission path message L0 includes a first message a, a first message b, and a first message c. The second apparatus #1 may delete the first message a corresponding to the second apparatus #1 in the transmission path message L0, and reserve a first message corresponding to the second apparatus #2 and the second apparatus #3 after the second apparatus #1, to obtain the transmission path message L1. In other words, the transmission path message L1 includes the first message b and the first message c.

S205: The second apparatus #1 sends the data packet W1 to the second apparatus #2, and correspondingly, the second apparatus #2 receives the data packet W1 from the second apparatus #1.

The second apparatus #2 is a 1^{st} node that is arranged after the second apparatus #1 on the transmission path, that is, a next node of the second apparatus #1. For example, when the second apparatus #1 is the data processing apparatus 21 on the 1^{st} transmission path shown in FIG. 1, the second apparatus #2 is the data processing apparatus 22 on the 1^{st} transmission path shown in FIG. 1; or when the second apparatus #1 is the data processing apparatus 31 on the 2^{nd} transmission path shown in FIG. 1, the second apparatus #2 is the data processing apparatus 32 on the 2^{nd} transmission path shown in FIG. 1.

The second apparatus #1 may determine the second apparatus #2 based on the transmission path message L0. For example, the transmission path message L0 includes the first message a, the first message b, and the first message c, to indicate the second apparatus #1, the second apparatus #2, and the second apparatus #3 respectively. Index data associated with the first message a, the first message b, and the first message c is 2, 1, and 0 respectively. After obtaining the transmission path message L0, the first apparatus #1 may know that index data associated with the first message a corresponding to the first apparatus #1 is 2, that is, current index data is 2. After executing the related function F1 of the data service, the second apparatus #1 subtracts 1 from the current index data to obtain that a next piece of index data is 1, and then may determine that a first message associated with the next piece of index data is the first message b, to determine the second apparatus #2 based on a node indicated by the first message b.

S206: The second apparatus #2 executes a related function F2 of the data service, and generates a data packet W2.

The related function F2 of the data service is a related function that is of the data service and that is to be executed by the second apparatus #2. The second apparatus #2 executes the related function F2 of the data service on the data payload P1 in the data packet W1, to obtain a data payload P2, and generates the data packet W2 based on the data payload P2 and the transmission path message L1. The data packet W2 includes the data payload P2 and a transmission path message L2. It should be understood that the data payload P2 is different from the data payload P1.

In an example, the transmission path message L2 may be the same as the transmission path message L1. For example, the transmission path message L1 includes the first message a, the first message b, and the first message c. The transmission path message L2 is the same as the transmission path message L1. In other words, the transmission path message L2 includes the first message a, the first message b, and the first message c. For another example, the transmission path message L1 includes the first message b and the first message c. The transmission path message L2 is the same as the transmission path message L1. In other words, the transmission path message L2 includes the first message b and the first message c.

In another example, the transmission path message L2 may be different from the transmission path message L1. For example, the transmission path message L1 includes the first message b and the first message c. The second apparatus #2 may delete the first message b corresponding to the second apparatus #2 in the transmission path message L0, and reserve a first message corresponding to the second apparatus #3 after the second apparatus #2, to obtain the transmission path message L2. In other words, the transmission path message L2 includes the first message c.

S207: The second apparatus #2 sends the data packet W2 to the second apparatus #3, and correspondingly, the second apparatus #3 receives the data packet W2 from the second apparatus #2.

The second apparatus #3 is a 1^{st} node that is arranged after the second apparatus #2 on the transmission path, that is, a next node of the second apparatus #2. For example, when the second apparatus #2 is the data processing apparatus 22 on the 1^{st} transmission path shown in FIG. 1, the second apparatus #3 is the data processing apparatus 23 on the 1^{st} transmission path shown in FIG. 1; or when the second apparatus #2 is the data processing apparatus 32 on the 2^{nd} transmission path shown in FIG. 1, the second apparatus #3 is the data processing apparatus 33 on the 2^{nd} transmission path shown in FIG. 1.

The second apparatus #2 may determine the second apparatus #3 based on the transmission path message L1. For example, the transmission path message L1 includes the first message a, the first message b, and the first message c, to indicate the second apparatus #1, the second apparatus #2, and the second apparatus #3 respectively. The index data associated with the first message a, the first message b, and the first message c is 2, 1, and 0 respectively. After obtaining the transmission path message L1, the second apparatus #2 may know that index data associated with the first message b corresponding to the second apparatus #2 is 1, that is, current index data is 1. After executing the related function F2 of the data service, the second apparatus #2 subtracts 1 from the current index data to obtain that a next piece of index data is 0, and then may determine that a first message associated with the next piece of index data is the first message c, to determine the second apparatus #3 based on a node indicated by the first message c.

S208: The second apparatus #3 executes a related function F3 of the data service.

The related function F3 of the data service is a related function that is of the data service and that is to be executed by the second apparatus #3. The second apparatus #3 executes the related function F3 of the data service on the data payload P2 in the data packet W2, to obtain a data payload P3.

In the example in FIG. 2, the second apparatus #3 is a last node on the transmission path, and may also be referred to as an egress node (egress node). Therefore, after completing processing, the second apparatus #3 obtains a final processing result. The second apparatus #3 may provide a data service interface for the data consumer (for example, the data consumer 40 or the data source 41 shown in FIG. 1) to obtain the final processing result.

In the foregoing solution, the transmission path message includes the cascaded at least one first message, and may indicate each node on the transmission path and a transmission sequence. The first apparatus sends the transmission path message to the 1^{st} node, so that each node on the transmission path can perform transmission of a data packet based on the transmission sequence, and perform related function processing of the data service on the data packet, to implement the data service.

Before step S201 in FIG. 2, that is, before the first apparatus generates the transmission path message, each node in a network may report a capability message to the first apparatus. After knowing the capability message of each node in the network, the first apparatus may determine, based on the data service request and the capability message of each node, a second apparatus for implementing the data service and a related function that is of the data service and that is to be executed by the second apparatus, so that the transmission path message can be dynamically configured, and the transmission path is more flexible.

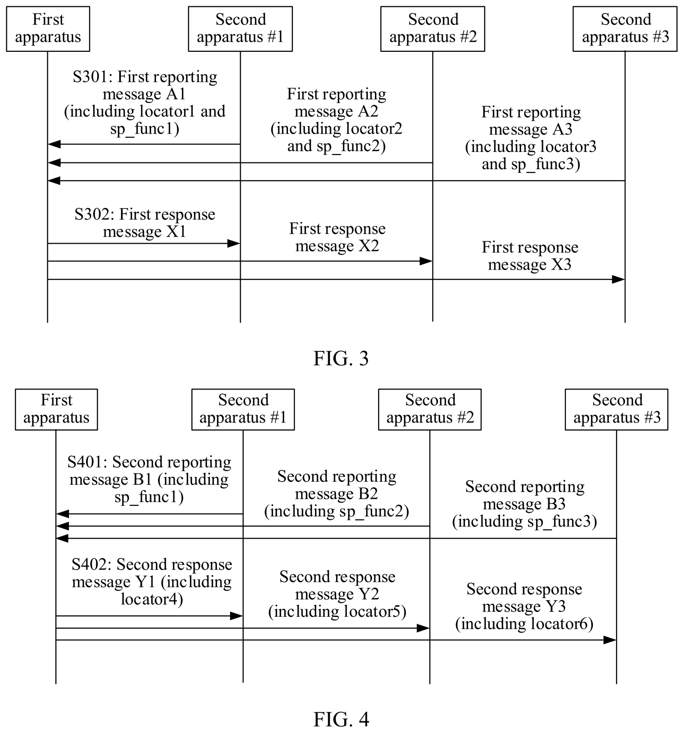

FIG. 3 is an interaction flowchart of capability reporting according to an embodiment of this application. In an example in FIG. 3, a transmission path includes three nodes: a second apparatus #1, a second apparatus #2, and a second apparatus #3. It should be understood that FIG. 3 is merely an example. In this example, the transmission path includes the three second apparatuses. In actual deployment, the transmission path may include one, two, or more second apparatuses. A procedure shown in FIG. 3 includes the following steps S301 and S302.

S301: The second apparatus #1 sends a first reporting message A1 to a first apparatus, and correspondingly, the first apparatus receives the first reporting message A1 from the second apparatus #1. The second apparatus #2 sends a first reporting message A2 to the first apparatus, and correspondingly, the first apparatus receives the first reporting message A2 from the second apparatus #2. The second apparatus #3 sends a first reporting message A3 to the first apparatus, and correspondingly, the first apparatus receives the first reporting message A3 from the second apparatus #3.

The first reporting message A1 includes identification message locator1 and support function message sp_func1, the identification message locator1 indicates the second apparatus #1, and the support function message sp_func1 indicates a related function that is of a data service and that is supported by the second apparatus #1. The first reporting message A2 includes identification message locator2 and support function message sp_func2, the identification message locator2 indicates the second apparatus #2, and the support function message sp_func2 indicates a related function that is of the data service and that is supported by the second apparatus #2. The first reporting message A3 includes identification message locator3 and support function message sp_func3, the identification message locator3 indicates the second apparatus #3, and the support function message sp_func3 indicates a related function that is of the data service and that is supported by the second apparatus #3.

It should be understood that one second apparatus may support one or more related functions of the data service. Correspondingly, a support function message reported by the second apparatus to the first apparatus may be an indication message of one or more function messages.

S302: The first apparatus sends a first response message X1 to the second apparatus #1, the first apparatus sends a first response message X2 to the second apparatus #2, and the first apparatus sends a first response message X3 to the second apparatus #3.

The first response message X1 is used to acknowledge the first reporting message A1, the first response message X2 is used to acknowledge the first reporting message A2, and the first response message X3 is used to acknowledge the first reporting message A3.

Based on the foregoing solution, the identification message of the second apparatus is configured by the second apparatus. The second apparatuses report an identification message and a support function message to the first apparatus, so that the first apparatus knows the identification message and the support function message, to orchestrate functions to be executed by the second apparatuses in the data service.

The first apparatus may determine execution function message func1 of the second apparatus #1, execution function message func2 of the second apparatus #2, and execution function message func3 of the second apparatus #3 based on a data service request, the support function message sp_func1 of the second apparatus #1, the support function message sp_func2 of the second apparatus #2, and the support function message sp_func3 of the second apparatus #3.

The execution function message func1 indicates a related function F1 that is of the data service and that is to be executed by the second apparatus #1, the execution function message func2 indicates a related function F2 that is of the data service and that is to be executed by the second apparatus #2, and the execution function message func3 indicates a related function F3 that is of the data service and that is to be executed by the second apparatus #3. The execution function message func1 is a subset of the support function message sp_func1, the execution function message func2 is a subset of the support function message sp_func2, and the execution function message func3 is a subset of the support function message sp_func3.

It should be understood that one second apparatus may execute one or more related functions in one data service. Correspondingly, an execution function message of the second apparatus may be an indication message of one or more function messages.

For example, if the support function message sp_func1 indicates only one related function (for example, F1) of the data service, the execution function message func1 is the same as the support function message sp_func1, that is, the execution function message func1 indicates only F1. For another example, if the support function message sp_func1 indicates a plurality of related functions (for example, F1, F2, and F3) of the data service, the execution function message func1 may indicate one or more of F1, F2, and F3, that is, may indicate only F1, indicate only F2, indicate F3, indicate F1 and F2, indicate F1 and F3, indicate F2 and F3, or indicate F1, F2, and F3.

After determining a related function that is of the data service and that is to be executed by each second apparatus, the first apparatus may further determine an execution sequence of related functions of the data service, and then may generate a transmission path message based on an identification message reported by each second apparatus, the related function that is of the data service and that is to be executed by each second apparatus, and the execution sequence of the related functions of the data service.

In a possible implementation, the first apparatus combines the identification message locator1 and the execution function message func1 of the second apparatus #1 to obtain a first message a, combines the identification message locator2 and the execution function message func2 of the second apparatus #2 to obtain a first message b, combines the identification message locator3 and the execution function message func3 of the second apparatus #3 to obtain a first message c, and then correspondingly sorts the first message a, the first message b, and the first message c based on the execution sequence of the related functions of the data service, to obtain the transmission path message.

For example, the transmission path message may be shown in the following Table 1.

**Table 1**

| Data service identifier | Transmission path message |
|---|---|
| DS_ID | locator1:func1 |
| | locator2: func2 |
| | locator3:func3 |

DS_ID is the data service identifier, and represents a specific data service task. The transmission path message is associated with the data service identifier. The transmission path message sequentially includes the first message a, the first message b, and the first message c. The first message a, the first message b, and the first message c are locator1:func1, locator2:func2, and locator3:func3 respectively, and are used to implement a data service represented by DS_ID.

In another example, the first message may further include a parameter message associated with the execution function message. The parameter message indicates a parameter that needs to be used in a process in which the second apparatus executes the related function of the data service. For example, a related function of the data service, namely, data collection, may be associated with a time parameter, to indicate a time period for data collection.

In a possible implementation, the first apparatus combines the identification message locator1, the execution function message func1, and parameter message args1 associated with the execution function message func1 of the second apparatus #1 to obtain a first message a, combines the identification message locator2, the execution function message func2, and parameter message args2 associated with the execution function message func2 of the second apparatus #2 to obtain a first message b, combines the identification message locator3, the execution function message func3, and parameter message args3 associated with the execution function message func3 of the second apparatus #3 to obtain a first message c, and then correspondingly sorts the first message a, the first message b, and the first message c based on the execution sequence of the related functions of the data service, to obtain the transmission path message.

For example, the transmission path message may be shown in the following Table 2.

**Table 2**

| Data service identifier | Transmission path message |
|---|---|
| DS_ID | locator1:func1:args1 |
| | locator2:func2:args2 |
| | locator3:func3:args3 |

DS_ID is the data service identifier, and represents a specific data service task. The transmission path message is associated with the data service identifier. The transmission path message sequentially includes the first message a, the first message b, and the first message c. The first message a, the first message b, and the first message c are locator1:func1:args1, locator2:func2:args2, and locator3:func3:args3 respectively, and are used to implement a data service represented by DS_ID.

Based on the foregoing solution, the first apparatus includes, in the transmission path message, the identification message and an execution function message of each second apparatus. Each second apparatus may obtain the execution function message from the transmission path message, to determine the related function that is of the data service and that is to be executed by the second apparatus, and may further obtain a next identification message from the transmission path message, to determine a next node of the second apparatus on the transmission path. In addition, the first apparatus may further include, in the transmission path message, the parameter message associated with the execution function message. The second apparatus may further obtain, from the transmission path message, the parameter message associated with the execution function message, to determine the parameter that needs to be used in the process in which the second apparatus executes the related function of the data service. This helps meet a more detailed function requirement.

FIG. 4 is another interaction flowchart of capability reporting according to an embodiment of this application. In an example in FIG. 4, a transmission path includes three nodes: a second apparatus #1, a second apparatus #2, and a second apparatus #3. It should be understood that FIG. 4 is merely an example. In this example, the transmission path includes the three second apparatuses. In actual deployment, the transmission path may include one, two, or more second apparatuses. A procedure shown in FIG. 4 includes the following steps S401 and S402.

S401: The second apparatus #1 sends a second reporting message B1 to a first apparatus, and correspondingly, the first apparatus receives the second reporting message B1 from the second apparatus #1. The second apparatus #2 sends a second reporting message B2 to the first apparatus, and correspondingly, the first apparatus receives the second reporting message B2 from the second apparatus #2. The second apparatus #3 sends a second reporting message B3 to the first apparatus, and correspondingly, the first apparatus receives the second reporting message B3 from the second apparatus #3.

The second reporting message B1 includes support function message sp_func1, and the support function message sp_func1 indicates a related function that is of a data service and that is supported by the second apparatus #1. The second reporting message B2 includes support function message sp_func2, and the support function message sp_func2 indicates a related function that is of the data service and that is supported by the second apparatus #2. The second reporting message B3 includes support function message sp_func3, and the support function message sp_func3 indicates a related function that is of the data service and that is supported by the second apparatus #3.

S402: The first apparatus sends a second response message Y1 to the second apparatus #1, the first apparatus sends a second response message Y2 to the second apparatus #2, and the first apparatus sends a second response message Y3 to the second apparatus #3.

The second response message Y1 is used to acknowledge the second reporting message B1, the second response message Y1 includes identification message locator4 allocated to the second apparatus #1, and the identification message locator4 indicates the second apparatus #1. The second response message Y2 is used to acknowledge the second reporting message B2, the second response message Y2 includes identification message locator5 allocated to the second apparatus #2, and the identification message locator5 indicates the second apparatus #2. The second response message Y3 is used to acknowledge the second reporting message B3, the second response message Y3 includes identification message locator6 allocated to the second apparatus #3, and the identification message locator6 indicates the second apparatus #3.

After receiving a message reported by each second apparatus, the first apparatus may know a network address of each second apparatus, that is, may know an identity of each second apparatus, to allocate a unique identification message to each second apparatus. For example, the identification message allocated by the first apparatus to the second apparatus may be the same as the network address of the second apparatus, or may have a correspondence or an indication relationship with the network address of the second apparatus.

Based on the foregoing solution, the second apparatuses report a support function message to the first apparatus, so that the first apparatus knows the support function message, to orchestrate functions to be executed by the second apparatuses in the data service. The first apparatus allocates the identification message of each second apparatus, and the first apparatus sends the allocated identification message to each second apparatus, so that each second apparatus knows the identification message.

The first apparatus may determine execution function message func1 of the second apparatus #1, execution function message func2 of the second apparatus #2, and execution function message func3 of the second apparatus #3 based on a data service request, the support function message sp_func1 of the second apparatus #1, the support function message sp_func2 of the second apparatus #2, and the support function message sp_func3 of the second apparatus #3. For descriptions of an execution function message of each second apparatus, refer to related descriptions in the foregoing embodiment. Details are not described herein again.

After determining a related function that is of the data service and that is to be executed by each second apparatus, the first apparatus may further determine an execution sequence of related functions of the data service, and then may generate a transmission path message based on the identification message allocated to each second apparatus, the related function that is of the data service and that is to be executed by each second apparatus, and the execution sequence of the related functions of the data service.

In a possible implementation, the first apparatus combines the identification message locator4 and the execution function message func1 of the second apparatus #1 to obtain a first message a, combines the identification message locator5 and the execution function message func2 of the second apparatus #2 to obtain a first message b, combines the identification message locator6 and the execution function message func3 of the second apparatus #3 to obtain a first message c, and then correspondingly sorts the first message a, the first message b, and the first message c based on the execution sequence of the related functions of the data service, to obtain the transmission path message.

For example, the transmission path message may be shown in the following Table 3.

**Table 3**

| Data service identifier | Transmission path message |
|---|---|
| DS_ID | locator4:func1 |
| | locator5:func2 |
| | locator6:func3 |

DS_ID is the data service identifier, and represents a specific data service task. The transmission path message is associated with the data service identifier. The transmission path message sequentially includes the first message a, the first message b, and the first message c. The first message a, the first message b, and the first message c are locator4:func1, locator5:func2, and locator6:func3 respectively, and are used to implement a data service represented by DS_ID.

Based on the foregoing solution, the first apparatus includes, in the transmission path message, the identification message and the execution function message of each second apparatus. Each second apparatus may obtain the execution function message of the second apparatus from the transmission path message, to determine the related function that is of the data service and that is to be executed by the second apparatus, and may further obtain a next identification message from the transmission path message, to determine a next node of the second apparatus on the transmission path.

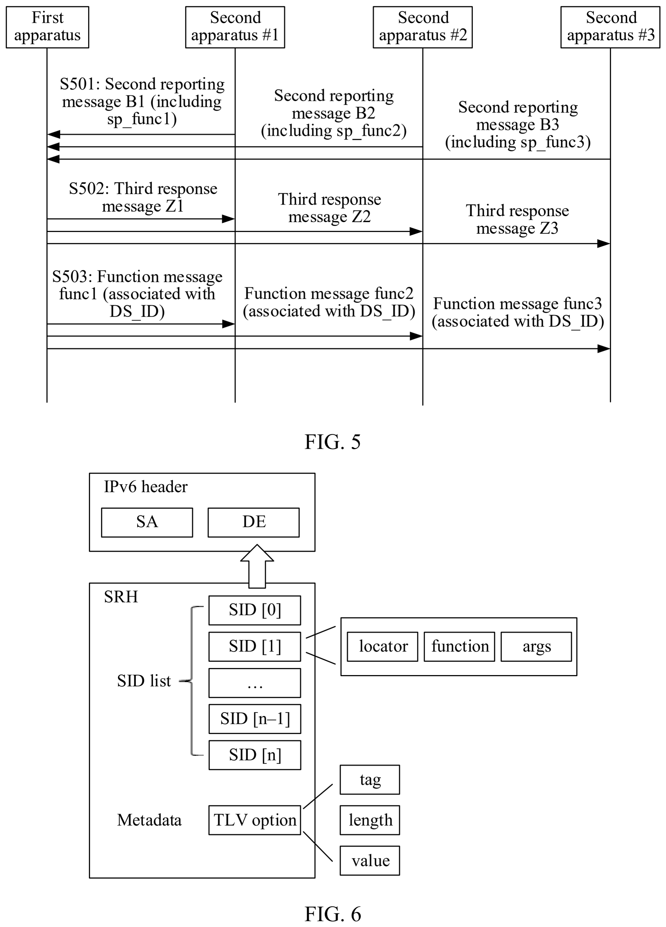

FIG. 5 is another interaction flowchart of capability reporting according to an embodiment of this application. In an example in FIG. 5, a transmission path includes three nodes: a second apparatus #1, a second apparatus #2, and a second apparatus #3. It should be understood that FIG. 4 is merely an example. In this example, the transmission path includes the three second apparatuses. In actual deployment, the transmission path may include one, two, or more second apparatuses. A procedure shown in FIG. 5 includes the following steps S501 to S503.

S501: The second apparatus #1 sends a second reporting message B1 to a first apparatus, and correspondingly, the first apparatus receives the second reporting message B1 from the second apparatus #1. The second apparatus #2 sends a second reporting message B2 to the first apparatus, and correspondingly, the first apparatus receives the second reporting message B2 from the second apparatus #2. The second apparatus #3 sends a second reporting message B3 to the first apparatus, and correspondingly, the first apparatus receives the second reporting message B3 from the second apparatus #3.

The second reporting message B1 includes support function message sp_func1, and the support function message sp_func1 indicates a related function that is of a data service and that is supported by the second apparatus #1. The second reporting message B2 includes support function message sp_func2, and the support function message sp_func2 indicates a related function that is of the data service and that is supported by the second apparatus #2. The second reporting message B3 includes support function message sp_func3, and the support function message sp_func3 indicates a related function that is of the data service and that is supported by the second apparatus #3.

S502: The first apparatus sends a third response message Z1 to the second apparatus #1, the first apparatus sends a third response message Z2 to the second apparatus #2, and the first apparatus sends a third response message Z3 to the second apparatus #3.

The third response message Z1 is used to acknowledge the second reporting message B1, the third response message Z2 is used to acknowledge the second reporting message B2, and the third response message Z3 is used to acknowledge the second reporting message B3.

Based on the foregoing solution, the second apparatuses report a support function message to the first apparatus, so that the first apparatus knows the support function message, to orchestrate functions to be executed by the second apparatuses in the data service.

The first apparatus may determine execution function message func1 of the second apparatus #1, execution function message func2 of the second apparatus #2, and execution function message func3 of the second apparatus #3 based on a data service request, the support function message sp_func1 of the second apparatus #1, the support function message sp_func2 of the second apparatus #2, and the support function message sp_func3 of the second apparatus #3. For descriptions of an execution function message of each second apparatus, refer to related descriptions in the foregoing embodiment. Details are not described herein again.

S503: The first apparatus sends the execution function message func1 to the second apparatus #1, and correspondingly, the second apparatus #1 receives the execution function message func1 from the first apparatus. The first apparatus sends the execution function message func2 to the second apparatus #2, and correspondingly, the second apparatus #2 receives the execution function message func2 from the first apparatus. The first apparatus sends the execution function message func3 to the second apparatus #3, and correspondingly, the second apparatus #3 receives the execution function message func3 from the first apparatus.

Optionally, the execution function message func1, the execution function message func2, and the execution function message func3 may be associated with a data service identifier. After receiving the execution function message func1, the second apparatus #1 may associate the execution function message func1 with the data service identifier for storage. After receiving the execution function message func2, the second apparatus #2 may associate the execution function message func2 with the data service identifier for storage. After receiving the execution function message func3, the second apparatus #3 may associate the function message func3 with the data service identifier for storage.

After receiving a message reported by the second apparatus #1, the first apparatus may know a network address address1 of the second apparatus #1. After receiving a message reported by the second apparatus #2, the first apparatus may know a network address address2 of the second apparatus #2. After receiving a message reported by the second apparatus #3, the first apparatus may know a network address address3 of the second apparatus #3. For example, the network address may be an internet protocol version 6 (internet protocol version 6, IPv6) based address, namely, an IPv6 address.

After determining a related function that is of the data service and that is to be executed by each second apparatus, the first apparatus may further determine an execution sequence of related functions of the data service, and then may generate a transmission path message based on a network address of each second apparatus and the execution sequence of the related functions of the data service.

In a possible implementation, the first apparatus uses the network address address1 of the second apparatus #1 as a first message a, uses the network address address2 of the second apparatus #2 as a first message b, uses the network address address3 of the second apparatus #3 as a first message c, and then correspondingly sorts the first message a, the first message b, and the first message c based on the execution sequence of the related functions of the data service, to obtain the transmission path message.

For example, the transmission path message may be shown in the following Table 4.

**Table 4**

| Data service identifier | Transmission path message |
|---|---|
| DS_ID | address 1 |
| | address2 |
| | address3 |

DS_ID is the data service identifier, and represents a specific data service task. The transmission path message is associated with the data service identifier. The transmission path message sequentially includes the first message a, the first message b, and the first message c. The first message a, the first message b, and the first message c are address1, address2, and address3 respectively, and are used to implement a data service represented by DS_ID.

Based on the foregoing solution, an identification message indicating the second apparatus does not need to be additionally configured, and the second apparatus may be indicated by an existing network address. The first apparatus includes the network address of each second apparatus in the transmission path message, and each second apparatus may obtain a next network address from the transmission path message, to determine a next node of the second apparatus on the transmission path. In addition, the transmission path message does not include a message about the function to be executed by each second apparatus in the data service. The first apparatus separately sends, to each second apparatus, a function message associated with the data service identifier. Each second apparatus may obtain, based on the data service identifier, the message about the to-be-executed function, to determine the to-be-executed related function of the data service.

In another example, the network address of the second apparatus in Table 4 may alternatively be replaced with the identification message of the second apparatus. This may also indicate each node on the transmission path. For example, address1, address2, and address3 may be respectively replaced with locator1, locator2, and locator3 in the foregoing embodiment. For another example, address1, address2, and address3 may be respectively replaced with locator4, locator5, and locator6 in the foregoing embodiment.

In a possible implementation, the transmission path message includes an internet protocol version 6 (internet protocol version 6, IPv6) segment routing header (segment routing header, SRH).

Segment routing (segment routing, SR) is a source routing mechanism that allows a node to explicitly specify a transmission path of a data packet. The SR may be applied to an IPv6 architecture, which is referred to as SRv6 (that is, segment routing over IPv6). A corresponding SRH includes a segment identifier (segment ID, SID) list, and each SID in the SID list represents one segment. The SRv6 uses an IPv6 address as the SID. Therefore, the SID of the SRv6 has a native IP attribute and is a routable address. When the IPv6 address is reachable, a service may be published based on the SRv6.

The transmission path message may be carried in the SRH including the SID list. Each SID in the SID list may represent one first message, and the SID list may indicate a cascaded plurality of first messages. The SRv6 supports programming of the SID, so that the SID supports a related function of the data service, to instruct a node to perform a corresponding operation, so as to implement data packet processing and forwarding.

FIG. 6 is a diagram of an IPv6 SRH according to an embodiment of this application. As shown in FIG. 6, an IPv6 header includes a source address (Source Address, denoted as an SA) and a destination address (Destination Address, denoted as a DE), an SRH includes an SID list, and the SID list includes an SID [0], an SID [1], ..., an SID [n-1], and an SID [n], where n is an integer greater than 0. Each SID represents one first message, that is, indicates one node on a transmission path. A message in [] may be understood as indexes of the first message, or may indicate a transmission sequence of nodes on the transmission path. A transmission direction shown in FIG. 6 is from the bottom of the SID list to the top, that is, the transmission path sequentially includes nodes indicated by the SID [n], the SID [n-1], ..., the SID [1], and the SID [0]. The SID list carries a node message. The SID list may be flexibly segmented, and the SIDs in the SID list may be configured as needed. This helps flexibly implement transmission path planning.

An SID type provided in this embodiment of this application is a new SID type of an SRv6 service function chain (Service Function Chain, SFC). For example, the SID type may be denoted as End.CN, and is used as a node SID to forward and perform related function processing of a data service on a data packet, to implement the data service. As shown in FIG. 6, the SID is divided into three fields: a locator (locator), a function (function), and a parameter (args). Locator indicates a node on the transmission path, function indicates a related function that is of the data service and that is to be executed by the node, and args indicates a parameter that needs to be used in a process in which the node executes the related function of the data service.

For example, function in the SID may be represented by using 8-bit binary data, and different function fields indicate different related functions of the data service. For example, if function is 00000001, the indicated related function of the data service is data collection. For another example, if function is 00010001, the indicated related function of the data service is data cleaning. For still another example, if function is 00100010, the indicated related function of the data service is distributed storage. For still another example, if function is 01010101, the indicated related function of the data service is federated learning. For still another example, if function is 00110010, the indicated related function of the data service is homomorphic encryption. For still another example, if function is 11111111, the indicated related function of the data service is data multicast. For still another example, if function is 11110000, the indicated related function of the data service is a data service interface.

It should be understood that the SID may alternatively be divided into more or fewer fields than the three fields shown in FIG. 6, and a message included in the fields is not limited to the message shown in FIG. 6. This is not limited in this application. The SID may carry a message about the related function of the data service, and the field in the SID may be configured as needed. This helps flexibly implement different data services.

In some examples, the SRH may further include metadata (Metadata), used to record a message related to the data multicast, for example, a target node message. The target node message may include a target SID list, and may further include a description message (for example, a tag and a length) of the target SID list. The target SID list includes a plurality of target SIDs, and each target SID indicates one target node. As shown in FIG. 6, the metadata includes a tag-length-value (tag-length-value, TLV) option, where a tag indicates the tag of the target SID list, a length indicates the length of the target SID list, and a value indicates the target SID list. The TLV option may carry the target node message associated with the data multicast, to help support a data service including a multicast scenario.

The following describes applications of embodiments of this application based on the SRv6.

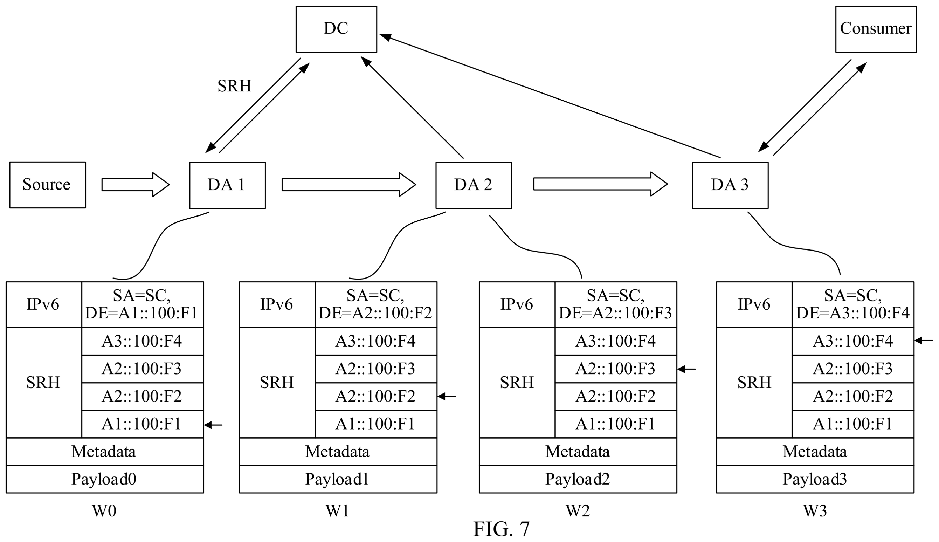

FIG. 7 is an application diagram of a transmission method for a data service according to an embodiment of this application. A DC represents a data orchestration apparatus, a DA 1, a DA 2, and a DA 3 each represent a data processing apparatus, a source represents a data source, and a consumer represents a data consumer.

The DA 1, the DA 2, and the DA 3 respectively report capabilities to the DC. The DC orchestrates, based on a data service request and the capabilities reported by the DA 1, the DA 2, and the DA 3, functions to be executed by the D1, the DA 2, and the DA 3 in the data service and an execution sequence, and constructs an SRH based on an orchestration result.

As shown in FIG. 7, an SID list in the SRH is {A1::100:F1, A2::100:F2, A2::100:F3, A3::100:F4}. A1::100, A2::100, and A3::100 are identifiers of the DA 1, the DA 2, and the DA 3 respectively, that is, respectively indicate the DA 1, the DA 2, and the DA 3. F1 represents a function to be executed by the DA 1 in the data service. F2 and F3 represent functions to be executed by the DA 2 in the data service. F4 represents a function to be executed by the DA 3 in the data service. The execution sequence is DA 1-F1, DA 2-F2, DA 2-F3, and DA 3-F4 sequentially.

The DC sends the SRH to the DA 1. The DA 1 obtains service data from the source and obtains a data packet WO based on the service data and the SRH. In the data packet WO, an IPv6 packet header includes a source address (SA) and a destination address (DE). In this case, the destination address is A1::100:F1, and indicates the DA 1.

The DA 1 determines the to-be-executed function F1 based on an SID corresponding to the destination address in the data packet WO. The DA 1 executes F1 on a data payload Payload0 in the data packet WO, to obtain a data payload Payload1, and generates a data packet W1 based on the data payload Payload1 and the SRH. In the data packet W1, a destination address in an IPv6 packet header is A2::100:F2, and indicates the DA 2.

The DA 1 sends the data packet W1 to the DA 2. The DA 2 determines the to-be-executed function F2 based on an SID corresponding to the destination address in the data packet W1. The DA 2 executes F2 on the data payload Payload1 in the data packet W1, to obtain a data payload Payload2, and generates a data packet W2 based on the data payload Payload2 and the SRH. In the data packet W2, a destination address in an IPv6 packet header is A2::100:F3, and indicates the DA 2.

The DA 2 determines the to-be-executed function F3 based on an SID corresponding to the destination address in the data packet W2. The DA 2 executes F3 on the data payload Payload2 in the data packet W2, to obtain a processed data payload Payload3, and generates a data packet W3 based on the data payload Payload3 and the SRH. In the data packet W3, a destination address in an IPv6 packet header is A3::100:F4, and indicates the DA 3.

The DA 2 sends the data packet W3 to the DA 3. The DA 3 determines the to-be-executed function F4 based on an SID corresponding to the destination address in the data packet W3. The DA 3 executes F4 on the data payload Payload3 in the data packet W3, to obtain a final processing result. The DA 3 provides a data service interface for the consumer to obtain the final processing result.

Based on the foregoing solution, the SRH indicates an identifier of each DA, a related function that is of the data service and that is to be executed by each DA, and the execution sequence. Each DA may perform data packet transmission based on the identifier and the execution sequence that are indicated by the SRH, and may perform corresponding processing on a data payload in a data packet based on the related function that is of the data service and that is indicated by the SRH, to implement the data service.

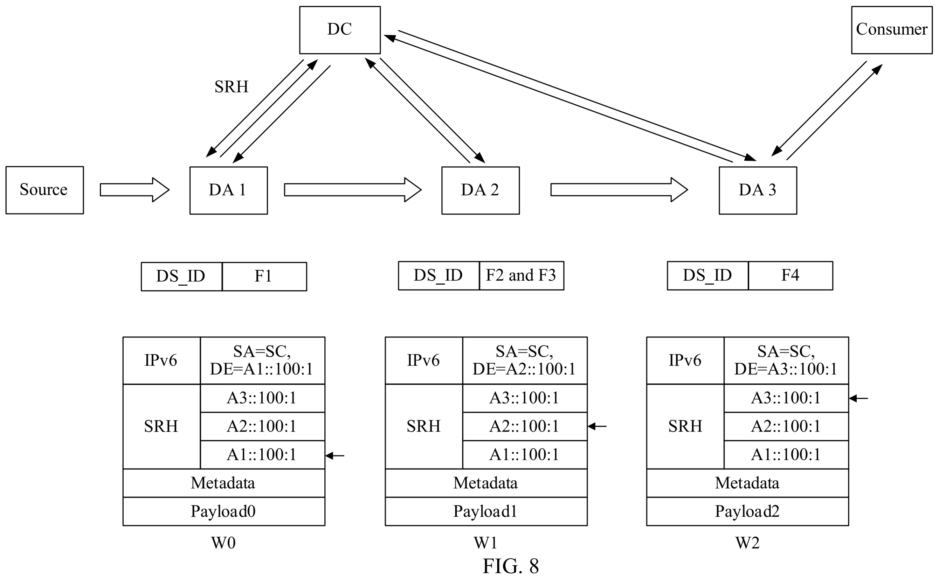

FIG. 8 is an application diagram of another transmission method for a data service according to an embodiment of this application. A DC represents a data orchestration apparatus, a DA 1, a DA 2, and a DA 3 each represent a data processing apparatus, a source represents a data source, a consumer represents a data consumer, and DS_ID represents a data service identifier.

The DA 1, the DA 2, and the DA 3 respectively report capabilities to the DC. The DC orchestrates, based on a data service request and the capabilities reported by the DA 1, the DA 2, and the DA 3, functions to be executed by the D1, the DA 2, and the DA 3 in the data service and an execution sequence, and constructs an SRH based on an orchestration result.

As shown in FIG. 8, the DC delivers an indication message of a function F1 to the DA 1, to indicate the function F1 to be executed by the DA 1 in the data service indicated by DS_ID. The DC delivers an indication message of functions F2 and F3 to the DA 2, to indicate the functions F2 and F3 to be executed by the DA 2 in the data service indicated by DS_ID. The DC delivers an indication message of a function F4 to the DA 3, to indicate the function F4 to be executed by the DA 3 in the data service indicated by DS_ID. An SID list in the SRH is {A1::100:1, A2::100:1, A3::100:1}. A1::100:1, A2::100:1, and A3::100:1 are identifiers (for example, may be IPv6 addresses) of the DA 1, the DA 2, and the DA 3 respectively, that is, respectively indicate the DA 1, the DA 2, and the DA 3. The execution sequence is DA 1-F1, DA 2-F2, DA 2-F3, and DA 3-F4 sequentially.

The DC sends the SRH to the DA 1. The DA 1 obtains service data from the source and obtains a data packet WO based on the service data and the SRH. In the data packet WO, an IPv6 packet header includes a source address SA and a destination address DE. In this case, the destination address is A1::100:1, and indicates the DA 1.

The DA 1 determines the to-be-executed function F1 based on the data service identifier DS_ID. The DA 1 executes F1 on a data payload Payload0 in the data packet WO, to obtain a data payload Payload1, and generates a data packet W1 based on the data payload Payload1 and the SRH. In the data packet W1, a destination address in an IPv6 packet header is A2::100:1, and indicates the DA 2.

The DA 1 sends the data packet W1 to the DA 2. The DA 2 determines the to-be-executed functions F2 and F3 based on the data service identifier DS_ID. The DA 2 executes F2 and F3 on the data payload Payload1 in the data packet W1, to obtain a data payload Payload2, and generates a data packet W2 based on the data payload Payload2 and the SRH. In the data packet W2, a destination address in an IPv6 packet header is A3::100:1, and indicates the DA 3.

The DA3 determines the to-be-executed function F4 based on the data service identifier DS_ID. The DA 3 executes F4 on the data payload Payload2 in the data packet W2, to obtain a final processing result. The DA 3 provides a data service interface for the consumer to obtain the final processing result.

Based on the foregoing solution, the SRH indicates an identifier of each DA and the execution sequence. In addition, the DC delivers a function indication message to each DA, and each DA may perform data packet transmission based on the identifier and the execution sequence that are indicated by the SRH, and may perform corresponding processing on a data payload in a data packet based on a related function that is of the data service and that is indicated by the received function indication message, to implement the data service.

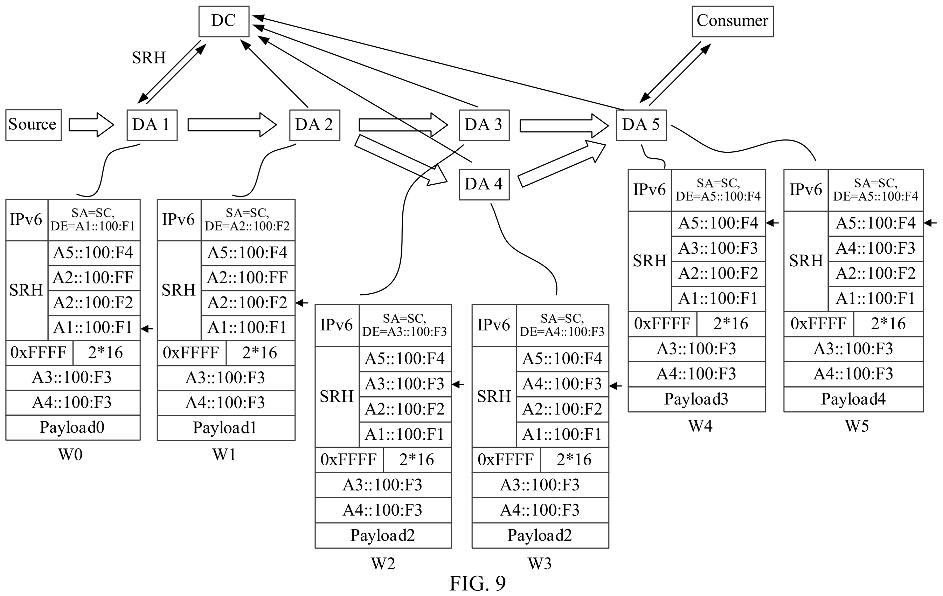

FIG. 9 is an application diagram of another transmission method for a data service according to an embodiment of this application. The data service relates to data multicast. A DC represents a data orchestration apparatus, a DA 1, a DA 2, a DA 3, a DA 4, and a DA 5 each represent a data processing apparatus, a source represents a data source, and a consumer represents a data consumer.

The DA 1, the DA 2, the DA 3, the DA 4, and the DA 5 respectively report capabilities to the DC. The DC orchestrates, based on a data service request and the capabilities reported by the DA 1, the DA 2, the DA 3, the DA 4, and the DA 5, functions to be executed by the D1, the DA 2, the DA 3, the DA 4, and the DA 5 in the data service and an execution sequence, and constructs an SRH based on an orchestration result.

As shown in FIG. 9, an SID list in the SRH is {A1::100:F1, A2::100:F2, A2::100:FF, A5::100:F4}. A1::100, A2::100, and A5::100 are identifiers of the DA 1, the DA 2, and the DA 5 respectively, that is, respectively indicate the DA 1, the DA 2, and the DA 5. F1 represents a function to be executed by the DA 1 in the data service. F2 and FF represent functions to be executed by the DA 2 in the data service. F4 represents a function to be executed by the DA 5 in the data service. FF represents a data multicast function. 0xFFFF represents a multicast message label, and indicates a target SID list associated with the data multicast function FF. The target SID list is {A3::100:F3, A4::100:F3}. A3::100 and A4::100 are identifiers of the DA 3 and the DA 4 respectively, that is, respectively indicate the DA 3 and the DA 4. F3 represents a function to be executed by the DA 3 and the DA 4 in the data service. The execution sequence is DA 1-F1, DA 2-F2, DA 3-F3, DA 4-F3, and DA 5-F4 sequentially.

The DC sends the SRH to the DA 1. The DA 1 obtains service data from the source and obtains a data packet WO based on the service data and the SRH. In the data packet WO, an IPv6 packet header includes a source address SA and a destination address DA. In this case, the destination address is A1::100:F1, and indicates the DA 1.

The DA 1 determines the to-be-executed function F1 based on an SID corresponding to the destination address in the data packet WO. The DA 1 executes F1 on a data payload Payload0 in the data packet WO, to obtain a data payload Payload1, and generates a data packet W1 based on the data payload Payload1 and the SRH. In the data packet W1, a destination address in an IPv6 packet header is A2::100:F2, and indicates the DA 2.

The DA 1 sends the data packet W1 to the DA 2. The DA 2 determines the to-be-executed function F2 based on an SID corresponding to the destination address in the data packet W1. The DA 2 executes F2 on the data payload Payload1 in the data packet W1, to obtain a data payload Payload2, and determines that a next destination address is A2::100:FF that indicates the DA 2.

The DA 2 continues to execute FF, to obtain that to-be-multicast target SIDs are A3::100:F3 and A4::100:F3, and generates data packets W2 and W3 based on the data payload Payload2 and the SRH. In the data packet W2, a destination address in an IPv6 packet header is A3::100:F3, and indicates the DA 3. In the data packet W3, a destination address in an IPv6 packet header is A4::100:F3, and indicates the DA 4.

The DA 2 sends the data packet W2 to the DA 3, and the DA 2 sends the data packet W3 to the DA 4. The DA 3 determines the to-be-executed function F3 based on an SID corresponding to the destination address in the data packet W2. The DA 3 executes F3 on the data payload Payload2 in the data packet W2, to obtain a data payload Payload3, and generates a data packet W4 based on the data payload Payload3 and the SRH. In the data packet W4, a destination address in an IPv6 packet header is A5::100:F4, and indicates the DA 5. The DA 4 determines the to-be-executed function F3 based on an SID corresponding to the destination address in the data packet W3. The DA 4 executes F3 on the data payload Payload2, to obtain a data payload Payload4, and generates a data packet W5 based on the data payload Payload4 and the SRH. In the data packet W5, a destination address in an IPv6 packet header is A5::100:F4, and indicates the DA 5.

The DA 3 sends the data packet W4 to the DA 5, and the DA 4 sends the data packet W5 to the DA 5. The DA 5 determines the to-be-executed function F4 based on SIDs corresponding to the destination addresses in the data packets W4 and W5. The DA 5 executes F4 on the data payload Payload3 in the data packet W4 and the Payload4 in the data packet W5, to obtain a final processing result. The DA 5 provides a data service interface for the consumer to obtain the final processing result.

Based on the foregoing solution, the SRH further includes the target SID list associated with the data multicast function. A multicast node may send, based on the target SID list in the SRH, a data packet to a plurality of target nodes indicated by the target SID list, to implement a data service including a multicast scenario.

A sequence of the steps in the foregoing flowchart is determined based on internal logic of the method. Sequence numbers shown in the foregoing flowchart are merely examples, and do not constitute a limitation on the sequence of the steps in this application.

It should be further understood that the methods provided in embodiments of this application may be used separately, or may be used in combination. This is not limited in this application. Various implementations provided in embodiments of this application may be used separately, or may be used in combination. This is not limited in this application. Various examples provided in embodiments of this application may be used separately, or may be used in combination. This is not limited in this application.

It should be noted that the execution body shown in FIG. 2 to FIG. 5 is merely an example. The execution body may alternatively be a chip, a chip system, or a processor that supports the execution body in implementing the method shown in FIG. 2 to FIG. 5. This is not limited in this application.

The foregoing describes the method embodiments in embodiments of this application with reference to the accompanying drawings, and the following describes apparatus embodiments in embodiments of this application. It may be understood that the descriptions of the method embodiments and the descriptions of the apparatus embodiments may correspond to each other. Therefore, for a part that is not described, refer to the foregoing method embodiments.

It may be understood that, in the foregoing method embodiments, the method and the operation implemented by the first apparatus may alternatively be implemented by a component (for example, a chip or a circuit) in the first apparatus. The method and the operation implemented by the second apparatus may alternatively be implemented by a component (for example, a chip or a circuit) in the second apparatus.

The foregoing mainly describes the solutions provided in embodiments of this application from a perspective of interaction between apparatuses. It may be understood that, to implement the foregoing functions, each apparatus like a transmitting-end device or a receiving-end device includes a corresponding hardware structure and/or software module for executing each function. A person skilled in the art may be aware that, with reference to the examples described in embodiments disclosed in this specification, units and algorithm steps can be implemented by hardware or a combination of computer software and hardware in this application. Whether a function is executed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, division into functional modules may be performed on a transmitting-end device or a receiving-end device based on the foregoing method examples. For example, division into each functional module may be performed based on each corresponding function, or two or more functions may be integrated into one processing module. The integrated module may be implemented in a form of hardware, or may be implemented in a form of a software functional module. It should be noted that, in embodiments of this application, division into the modules is an example, is merely logical function division, and may be other division in actual implementation. An example in which division into each functional module is performed based on each corresponding function is used below for description.

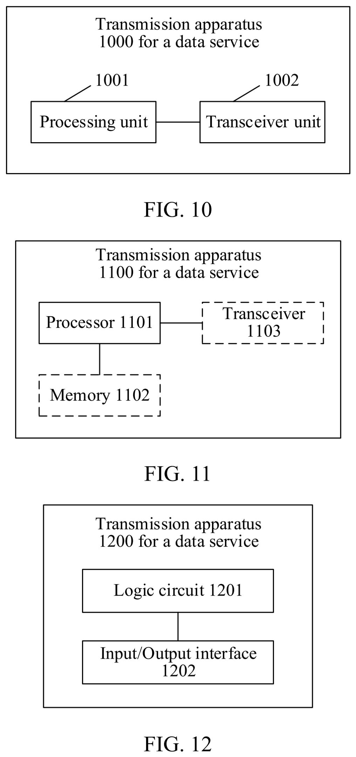

FIG. 10 is a diagram of a structure of a transmission apparatus for a data service according to an embodiment of this application. The transmission apparatus 1000 of the data service shown in FIG. 10 includes a processing unit 1001 and a transceiver unit 1002. The processing unit 1001 is configured to perform data processing. The transceiver unit 1002 may communicate with the outside. The transceiver unit 1002 may also be referred to as a communication interface or a communication unit.

Optionally, the transceiver unit 1002 may include a sending unit and a receiving unit. The sending unit is configured to perform the sending operation in the foregoing method embodiments. The receiving unit is configured to perform the receiving operation in the foregoing method embodiments.

It should be noted that the transmission apparatus 1000 of the data service may include the sending unit, but does not include the receiving unit. Alternatively, the transmission apparatus 1000 of the data service may include the receiving unit, but does not include the sending unit. Specifically, it may be determined depending on whether the foregoing solution performed by the transmission apparatus 1000 of the data service includes a sending action and a receiving action.

Optionally, the transmission apparatus 1000 of the data service may further include a storage unit. The storage unit may be configured to store instructions and/or data. The processing unit 1001 may read the instructions and/or the data in the storage unit.

In a design, the transmission apparatus 1000 of the data service may be configured to perform actions performed by the first apparatus in the foregoing method embodiments. The first apparatus may be a functional network element in a network, may be a chip or a circuit in a network device or a core network device, or may be a logical module or software that can implement all or some functions of the network device or the core network device. This is not limited in this application. In a possible implementation, the first apparatus is a data orchestration apparatus.

Optionally, the transmission apparatus 1000 of the data service may be the first apparatus, the processing unit 1001 is configured to perform an internal processing operation of the first apparatus in the foregoing method embodiments, and the transceiver unit 1002 is configured to perform a receiving or sending operation of the first apparatus in the foregoing method embodiments.

Optionally, the transmission apparatus 1000 of the data service may be a device including the first apparatus. Alternatively, the transmission apparatus 1000 of the data service may be a component configured in the first apparatus, for example, a chip in the first apparatus. In this case, the transceiver unit 1002 may be an interface circuit, a pin, or the like. Specifically, the interface circuit may include an input circuit and an output circuit, and the processing unit 1001 may include a processing circuit.

In a possible implementation, the processing unit 1001 is configured to generate a transmission path message, where the transmission path message includes cascaded at least one first message, the first message indicates a node on a transmission path, and the node is configured to implement a related function of the data service. The transceiver unit 1002 is configured to send the transmission path message to a first node, where the first node is a node indicated by a 1^{st} first message in the cascaded at least one first message.

In a possible implementation, the related function of the data service includes one or more of the following: data collection, data preprocessing, data storage, data analysis, data security and privacy protection, data multicast, and a data service interface.

In a possible implementation, the first message includes a first identification message and a first function message, the first identification message indicates the node, and the first function message indicates the related function that is of the data service and that is to be executed by the node.

In a possible implementation, the first message further includes a parameter message associated with the first function message.

In a possible implementation, before the processing unit 1001 generates the transmission path message, the transceiver unit 1002 is further configured to: receive a first reporting message from a second node in the network, where the first reporting message includes a second identification message and a second function message, the second identification message indicates the second node, and the second function message indicates a related function that is of the data service and that is supported by the second node; and send a first response message to the second node, where the first response message is used to acknowledge the first reporting message.

In a possible implementation, before the processing unit 1001 generates the transmission path message, the transceiver unit 1002 is further configured to: receive a second reporting message from a second node in the network, where the second reporting message includes a second function message, and the second function message indicates a related function that is of the data service and that is supported by the second node; and send a second response message to the second node, where the second response message includes an identification message allocated to the second node.

In a possible implementation, the first message includes a network address of the node.

In a possible implementation, before the processing unit 1001 generates the transmission path message, the transceiver unit 1002 is further configured to: receive a second reporting message from a second node in the network, where the second reporting message includes a second function message, and the second function message indicates a related function that is of the data service and that is supported by the second node; and send a third response message to the second node, where the third response message is used to acknowledge the second reporting message.

In a possible implementation, the transceiver unit 1002 is further configured to send a first function message to each node, where the first function message indicates a related function that is of the data service and that is to be executed by the node.

In a possible implementation, when there is a first message indicating a multicast node, the transmission path message further includes a second message, and the second message indicates a plurality of target nodes associated with the multicast node.

In a possible implementation, the second message includes a plurality of third messages, and the third message indicates one of the plurality of target nodes.

In a possible implementation, the third message includes a third identification message and a third function message, the third identification message indicates the target node, and the third function message indicates a related function that is of the data service and that is to be executed by the target node.

In a possible implementation, the third message includes a network address of the target node.

In a possible implementation, the transmission path message includes an internet protocol version 6 IPv6 segment routing header, the segment routing header includes at least one segment identifier, the segment identifier includes a first field and a second field, the first field indicates a node on the transmission path, and the second field indicates a related function that is of the data service and that is to be executed by the node.

In a possible implementation, the segment identifier further includes a third field, and the third field indicates a parameter that needs to be used in a process in which the node executes the related function of the data service.

In another design, the transmission apparatus 1000 of the data service shown in FIG. 10 may be configured to perform actions performed by the second apparatus in the foregoing method embodiments. The second apparatus may be a functional network element in a network, may be a chip or a circuit in a terminal device, a network device, a core network device, or an operations, administration, and maintenance device, or may be a logical module or software that can implement all or some functions of the terminal device, the network device, the core network device, or the operations, administration, and maintenance device. This is not limited in this application. In a possible implementation, the second apparatus is a data processing apparatus.

Optionally, the transmission apparatus 1000 of the data service may be the second apparatus, the processing unit 1001 is configured to perform an internal processing operation of the second apparatus in the foregoing method embodiments, and the transceiver unit 1002 is configured to perform a receiving or sending operation of the second apparatus in the foregoing method embodiments.

Optionally, the transmission apparatus 1000 of the data service may be a device including the second apparatus. Alternatively, the transmission apparatus 1000 of the data service may be a component configured in the first apparatus, for example, a chip in the first apparatus. In this case, the transceiver unit 1002 may be an interface circuit, a pin, or the like. Specifically, the interface circuit may include an input circuit and an output circuit, and the processing unit 1001 may include a processing circuit.

In a possible implementation, the transceiver unit 1002 is configured to obtain a first data packet, where the first data packet includes a transmission path message, the transmission path message includes cascaded at least one first message, the first message indicates a node on a transmission path, and the node is configured to implement a related function of the data service. The processing unit 1001 is configured to: execute a related function of the data service, and generate a second data packet. The transceiver unit 1002 is further configured to send the second data packet to a next node, where the second data packet includes the transmission path message.

In a possible implementation, the related function of the data service includes one or more of the following: data collection, data preprocessing, data storage, data analysis, data security and privacy protection, data multicast, and a data service interface.

In a possible implementation, when obtaining the first data packet, the transceiver unit 1002 is specifically configured to: receive the transmission path message from a first apparatus, and obtain the first data packet based on service data and the transmission path message.

In a possible implementation, when obtaining the first data packet, the transceiver unit 1002 is specifically configured to receive the first data packet from a previous node.

In a possible implementation, the first message includes a first identification message and a first function message, the first identification message indicates the node, and the first function message indicates the related function that is of the data service and that is to be executed by the node.

In a possible implementation, the first message further includes a parameter message associated with the first function message.

In a possible implementation, before the transceiver unit 1002 obtains the first data packet, the transceiver unit 1002 is further configured to: send a first reporting message to the first apparatus, where the first reporting message includes a second identification message and a second function message, the second identification message indicates the second apparatus, and the second function message indicates a related function that is of the data service and that is supported by the second apparatus; and receive a first response message from the first apparatus, where the first response message is used to acknowledge the first reporting message.

In a possible implementation, before the transceiver unit 1002 obtains the first data packet, the transceiver unit 1002 is further configured to: send a second reporting message to the first apparatus, where the second reporting message includes a second function message, and the second function message indicates a related function that is of the data service and that is supported by the second apparatus; and receive a second response message from the first apparatus, where the second response message includes an identification message allocated to the second apparatus.

In a possible implementation, when executing the related function of the data service, the processing unit 1001 is specifically configured to: obtain the first function message based on the cascaded at least one first message, and execute the related function that is of the data service and that is indicated by the first function message.

In a possible implementation, the first message includes a network address of the node.

In a possible implementation, before the transceiver unit 1002 obtains the first data packet, the transceiver unit 1002 is further configured to: send a second reporting message to the first apparatus, where the second reporting message includes a second function message, and the second function message indicates a related function that is of the data service and that is supported by the second apparatus; and receive a third response message from the first apparatus, where the third response message is used to acknowledge the second reporting message.

In a possible implementation, the transceiver unit 1002 is further configured to receive a first function message from the first apparatus, where the first function message indicates the related function that is of the data service and that is to be executed by the second apparatus. When executing the related function of the data service, the processing unit 1001 is specifically configured to execute the related function that is of the data service and that is indicated by the first function message.

In a possible implementation, when there is a first message indicating a multicast node, the transmission path message further includes a second message, and the second message indicates a plurality of target nodes associated with the multicast node.

In a possible implementation, the second message includes a plurality of third messages, and the third message indicates one of the plurality of target nodes.

In a possible implementation, the third message includes a third identification message and a third function message, the third identification message indicates the target node, and the third function message indicates a related function that is of the data service and that is to be executed by the target node.

In a possible implementation, the third message includes a network address of the target node.

In a possible implementation, when the transmission apparatus of the data service is a multicast node, when executing the related function of the data service, the processing unit 1001 is specifically configured to obtain a plurality of associated target nodes based on the second message; and when sending the second data packet to the next node, the transceiver unit 1002 is specifically configured to send the second data packet to each of the plurality of target nodes.

In a possible implementation, the transmission path message includes an internet protocol version 6 IPv6 segment routing header, the segment routing header includes at least one segment identifier, the segment identifier includes a first field and a second field, the first field indicates a node on the transmission path, and the second field indicates a related function that is of the data service and that is to be executed by the node.

In a possible implementation, the segment identifier further includes a third field, and the third field indicates a parameter that needs to be used in a process in which the node executes the related function of the data service.

FIG. 11 is a diagram of a structure of another transmission apparatus for a data service according to an embodiment of this application. The transmission apparatus 1100 of the data service shown in FIG. 11 includes a processor 1101. The processor 1101 is coupled to a memory 1102. The memory 1102 is configured to store a computer program (or instructions) and/or data. The processor 1101 is configured to execute the computer program (or the instructions) and/or the data stored in the memory 1102, so that the method in the foregoing method embodiments is performed.

Optionally, the transmission apparatus 1100 of the data service includes one or more processors 1101.

Optionally, as shown in FIG. 11, the transmission apparatus 1100 of the data service may further include the memory 1102.

Optionally, the transmission apparatus 1100 of the data service includes one or more memories 1102.

Optionally, the memory 1102 and the processor 1101 may be integrated together, or separately disposed.

Optionally, as shown in FIG. 11, the transmission apparatus 1100 of the data service may further include a transceiver 1103 and/or a communication interface. The transceiver 1103 and/or the communication interface are/is configured to receive and/or send a signal. For example, the processor 1101 is configured to control the transceiver 1103 and/or the communication interface to receive and/or send the signal.

Optionally, a device configured to implement a receiving function in the transceiver 1103 may be considered as a receiving module, and a device configured to implement a sending function in the transceiver 1103 may be considered as a sending module. In other words, the transceiver 1103 includes a receiver and a transmitter. The transceiver sometimes may also be referred to as a transceiver machine, a transceiver module, a transceiver circuit, or the like. The receiver sometimes may also be referred to as a receiver machine, a receiving module, a receiver circuit, or the like. The transmitter sometimes may also be referred to as a transmitter machine, a transmitter, a transmitting module, a transmitter circuit, or the like.

In a solution, the transmission apparatus 1100 of the data service is configured to implement operations performed by the first apparatus in the foregoing method embodiments. For example, the processor 1101 is configured to implement an operation (for example, the operation of S201) performed inside the first apparatus in the foregoing method embodiments, and the transceiver 1103 is configured to implement receiving or sending operations (for example, the operations of S202, S301, S302, S401, S402, S501, S502, and S503) performed by the first apparatus in the foregoing method embodiments.

In another solution, the transmission apparatus 1100 of the data service is configured to implement operations performed by the second apparatus in the foregoing method embodiments. For example, the processor 1101 is configured to implement operations (for example, the operations of S204, S206, and S208) performed inside the second apparatus in the foregoing method embodiments, and the transceiver 1103 is configured to implement receiving or sending operations (for example, the operations of S202, S205, S207, S301, S302, S401, S402, S501, S502, and S503) performed by the second apparatus in the foregoing method embodiments.

FIG. 12 is a diagram of a structure of another transmission apparatus for a data service according to an embodiment of this application. The transmission apparatus 1200 of the data service shown in FIG. 12 includes a logic circuit 1201 and an input/output interface (input/output interface) 1202.

The logic circuit 1201 may be a processing circuit in the transmission apparatus 1200 of the data service. The logic circuit 1201 may be coupled to a storage unit, and invoke instructions in the storage unit, to enable the transmission apparatus 1200 of the data service to implement the methods and functions in embodiments of this application. The input/output interface 1202 may be an input/output circuit in the transmission apparatus 1200 of the data service, and outputs a message obtained by processing by the transmission apparatus 1200 of the data service, or inputs to-be-processed data or a signaling message into the transmission apparatus 1200 of the data service for processing.

In a solution, the transmission apparatus 1200 of the data service is configured to implement operations performed by the first apparatus in the foregoing method embodiments.

For example, the logic circuit 1201 is configured to implement a processing-related operation performed by the first apparatus in the foregoing method embodiments, for example, the processing operation of the first apparatus in S201. The input/output interface 1202 is configured to implement sending and/or receiving related operations performed by the first apparatus in the foregoing method embodiments, for example, the receiving and sending operations of the first apparatus in S202, S301, S302, S401, S402, S501, S502, and S503. For a specific operation performed by the logic circuit 1201, refer to the foregoing descriptions of the processing unit 1001. For the operations performed by the input/output interface 1202, refer to the foregoing descriptions of the transceiver unit 1002. Details are not described herein again.

In another solution, the transmission apparatus 1200 of the data service is configured to implement operations performed by the second apparatus in the foregoing method embodiments.

For example, the logic circuit 1201 is configured to implement processing-related operations performed by the second apparatus in the foregoing method embodiments, for example, the processing operations of the second apparatus in S204, S206, and S208. The input/output interface 1202 is configured to implement sending and/or receiving related operations performed by the second apparatus in the foregoing method embodiments, for example, the receiving and sending operations of the second apparatus in S202, S205, S207, S301, S302, S401, S402, S501, S502, and S503. For a specific operation performed by the logic circuit 1201, refer to the foregoing descriptions of the processing unit 1001. For the operations performed by the input/output interface 1202, refer to the foregoing descriptions of the transceiver unit 1002. Details are not described herein again.

It should be understood that the foregoing transmission apparatus of the data service may be one or more chips. For example, the transmission apparatus of the data service may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable controller (programmable logic device, PLD), or another integrated chip.

In an implementation process, the steps in the foregoing method embodiments may be implemented by using a hardware-integrated logic circuit in the processor or instructions in a form of software. The steps in the methods disclosed with reference to embodiments of this application may be directly performed by a hardware processor, or may be performed by a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads a message in the memory and completes the steps in the foregoing method embodiments in combination with the hardware of the processor. To avoid repetition, details are not described herein again.

It should be noted that the processor in embodiments of this application may be an integrated circuit chip, and has a signal processing capability. In an implementation process, the steps in the foregoing method embodiments may be implemented by using a hardware-integrated logic circuit in the processor or instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams disclosed in embodiments of this application. The general-purpose processor may be a microprocessor, any conventional processor, or the like. The steps in the methods disclosed with reference to embodiments of this application may be directly performed by a hardware decoding processor, or may be performed by a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads a message in the memory and completes the steps in the foregoing methods in combination with the hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitative description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the method described in this specification is intended to include but is not limited to these memories and any memory of another appropriate type.

For explanations and beneficial effects of related content of any one of the transmission apparatuses of the data service provided above, refer to the corresponding method embodiments provided above. Details are not described herein again.

According to the method provided in embodiments of this application, an embodiment of this application further provides a computer-readable storage medium. The computer-readable storage medium stores a computer program or instructions. When the computer program or the instructions are run on a computer, the computer is enabled to perform the method shown in the foregoing method embodiments. For example, when the computer program or the instructions are executed by the computer, the computer is enabled to implement the method performed by the first apparatus or the method performed by the second apparatus in the foregoing method embodiments.

An embodiment of this application further provides a computer program product including a computer program or instructions. When the computer program or the instructions are executed by a computer, the computer is enabled to perform the method shown in the foregoing method embodiments. For example, when the computer program or the instructions are executed by the computer, the computer is enabled to implement the method performed by the first apparatus or the method performed by the second apparatus in the foregoing method embodiments.

An embodiment of this application further provides a transmission system for a data service, including a first apparatus and a second apparatus. The first apparatus is configured to perform the method performed by the first apparatus in the foregoing method embodiments, and the second apparatus is configured to perform the method performed by the second apparatus in the foregoing method embodiments.

All or some of the foregoing embodiments may be implemented by using software, hardware, firmware, or any combination thereof. When the software is used to implement embodiments, all or some of the foregoing embodiments may be implemented in a form of a computer program product. The computer program product includes one or more computer programs or instructions. When the computer program or the instructions are loaded and executed on a computer, all or some of the procedures or functions in embodiments of this application are performed. The computer may be a general-purpose computer, a dedicated computer, a computer network, or another programmable apparatus. The computer program or the instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state drive, SSD)), or the like.

A person of ordinary skill in the art may be aware that, with reference to the examples described in embodiments disclosed in this specification, units and algorithm steps can be implemented by electronic hardware or a combination of computer software and electronic hardware. Whether the functions are executed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing described system, apparatus, and unit, refer to corresponding processes in the foregoing method embodiments. Details are not described herein again.

In the several embodiments provided in this application, it should be understood that the disclosed system, apparatus, and method may be implemented in another manner. For example, the foregoing described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, that is, may be located in one position, or may be distributed on a plurality of network units. Some or all of the units may be selected based on actual needs to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A transmission method for a data service, comprising:
generating, by a first apparatus, a transmission path message, wherein the transmission path message comprises cascaded at least one first message, the first message indicates a node on a transmission path, and the node is configured to implement a related function of the data service; and
sending, by the first apparatus, the transmission path message to a first node, wherein the first node is a node indicated by a 1^{st} first message in the cascaded at least one first message.

2. The method according to claim 1, wherein the related function of the data service comprises one or more items below: data collection, data preprocessing, data storage, data analysis, data security and privacy protection, data multicast, and a data service interface.

3. The method according to claim 1 or 2, wherein the first message comprises a first identification message and a first function message, the first identification message indicates the node, and the first function message indicates the related function that is of the data service and that is to be executed by the node.

4. The method according to claim 3, wherein the first message further comprises a parameter message associated with the first function message.

5. The method according to claim 3 or 4, wherein before the generating, by the first apparatus, the transmission path message, the method further comprises:
receiving, by the first apparatus, a first reporting message from a second node in a network, wherein the first reporting message comprises a second identification message and a second function message, the second identification message indicates the second node, and the second function message indicates a related function that is of the data service and that is supported by the second node; and
sending, by the first apparatus, a first response message to the second node, wherein the first response message is used to acknowledge the first reporting message.

6. The method according to claim 3 or 4, wherein before the generating, by the first apparatus, the transmission path message, the method further comprises:
receiving, by the first apparatus, a second reporting message from a second node in a network, wherein the second reporting message comprises a second function message, and the second function message indicates a related function that is of the data service and that is supported by the second node; and
sending, by the first apparatus, a second response message to the second node, wherein the second response message comprises an identification message allocated to the second node.

7. The method according to claim 1 or 2, wherein the first message comprises a network address of the node.

8. The method according to claim 7, wherein before the generating, by the first apparatus, the transmission path message, the method further comprises:
receiving, by the first apparatus, a second reporting message from a second node in a network, wherein the second reporting message comprises a second function message, and the second function message indicates a related function that is of the data service and that is supported by the second node; and
sending, by the first apparatus, a third response message to the second node, wherein the third response message is used to acknowledge the second reporting message.

9. The method according to claim 7 or 8, wherein the method further comprises:
sending, by the first apparatus, a first function message to the node, wherein the first function message indicates the related function that is of the data service and that is to be executed by the node.

10. The method according to any one of claims 1 to 9, wherein when there is a first message indicating a multicast node, the transmission path message further comprises a second message, and the second message indicates a plurality of target nodes associated with the multicast node.

11. The method according to claim 1 or 2, wherein the transmission path message comprises an internet protocol version 6 IPv6 segment routing header, the segment routing header comprises at least one segment identifier, the segment identifier comprises a first field and a second field, the first field indicates a node on the transmission path, and the second field indicates a related function that is of the data service and that is to be executed by the node.

12. A transmission method for a data service, comprising:
obtaining, by a second apparatus, a first data packet, wherein the first data packet comprises a transmission path message, the transmission path message comprises cascaded at least one first message, the first message indicates a node on a transmission path, and the node is configured to implement a related function of the data service;
executing, by the second apparatus, a related function of the data service, and generating a second data packet; and
sending, by the second apparatus, the second data packet to a next node, wherein the second data packet comprises the transmission path message.

13. The method according to claim 12, wherein the related function of the data service comprises one or more items below: data collection, data preprocessing, data storage, data analysis, data security and privacy protection, data multicast, and a data service interface.

14. The method according to claim 12 or 13, wherein the obtaining, by the second apparatus, the first data packet comprises:
receiving, by the second apparatus, the transmission path message from a first apparatus, and obtaining the first data packet based on service data and the transmission path message.

15. The method according to claim 12 or 13, wherein the obtaining, by the second apparatus, the first data packet comprises:
receiving, by the second apparatus, the first data packet from a previous node.

16. The method according to any one of claims 12 to 15, wherein the first message comprises a first identification message and a first function message, the first identification message indicates the node, and the first function message indicates the related function that is of the data service and that is to be executed by the node.

17. The method according to claim 16, wherein the first message further comprises a parameter message associated with the first function message.

18. The method according to claim 16 or 17, wherein before the obtaining, by the second apparatus, the first data packet, the method further comprises:
sending, by the second apparatus, a first reporting message to the first apparatus, wherein the first reporting message comprises a second identification message and a second function message, the second identification message indicates the second apparatus, and the second function message indicates a related function that is of the data service and that is supported by the second apparatus; and
receiving, by the second apparatus, a first response message from the first apparatus, wherein the first response message is used to acknowledge the first reporting message.

19. The method according to claim 16 or 17, wherein before the obtaining, by the second apparatus, the first data packet, the method further comprises:
sending, by the second apparatus, a second reporting message to the first apparatus, wherein the second reporting message comprises a second function message, and the second function message indicates a related function that is of the data service and that is supported by the second apparatus; and
receiving, by the second apparatus, a second response message from the first apparatus, wherein the second response message comprises an identification message allocated to the second apparatus.

20. The method according to any one of claims 16 to 19, wherein executing, by the second apparatus, the related function of the data service comprises:
obtaining, by the second apparatus, the first function message based on the cascaded at least one first message; and
executing, by the second apparatus, the related function that is of the data service and that is indicated by the first function message.

21. The method according to any one of claims 12 to 15, wherein the first message comprises a network address of the node.

22. The method according to claim 21, wherein before the obtaining, by the second apparatus, the first data packet, the method further comprises:
sending, by the second apparatus, a second reporting message to the first apparatus, wherein the second reporting message comprises a second function message, and the second function message indicates a related function that is of the data service and that is supported by the second apparatus; and
receiving, by the second apparatus, a third response message from the first apparatus, wherein the third response message is used to acknowledge the second reporting message.

23. The method according to claim 21 or 22, wherein executing, by the second apparatus, the related function of the data service comprises:
receiving, by the second apparatus, a first function message from the first apparatus, wherein the first function message indicates the related function that is of the data service and that is to be executed by the second apparatus; and
executing, by the second apparatus, the related function that is of the data service and that is indicated by the first function message.

24. The method according to any one of claims 12 to 23, wherein when there is a first message indicating a multicast node, the transmission path message further comprises a second message, and the second message indicates a plurality of target nodes associated with the multicast node.

25. The method according to claim 24, wherein when the second apparatus is a multicast node, executing, by the second apparatus, the related function of the data service comprises:
obtaining, by the second apparatus, a plurality of associated target nodes based on the second message; and
the sending, by the second apparatus, the second data packet to the next node comprises:
sending, by the second apparatus, the second data packet to each of the plurality of target nodes.

26. The method according to any one of claims 12 to 15, wherein the transmission path message comprises an internet protocol version 6 IPv6 segment routing header, the segment routing header comprises at least one segment identifier, the segment identifier comprises a first field and a second field, the first field indicates a node on the transmission path, and the second field indicates a related function that is of the data service and that is to be executed by the node.

27. A transmission apparatus for a data service, wherein the apparatus comprises a unit configured to perform steps of the method according to any one of claims 1 to 11, or the apparatus comprises a unit configured to perform steps of the method according to any one of claims 12 to 26.

28. A transmission apparatus for a data service, wherein the apparatus comprises a processor, the processor is coupled to a memory, the memory stores instructions, and when the instructions are run by the processor, the processor is enabled to perform the method according to any one of claims 1 to 11, or perform the method according to any one of claims 12 to 26.

29. A transmission apparatus for a data service, wherein the apparatus comprises a logic circuit, and the logic circuit is configured to: be coupled to an input/output interface, and perform data transmission through the input/output interface, to perform the method according to any one of claims 1 to 11, or perform the method according to any one of claims 12 to 26.

30. A transmission system for a data service, wherein the system comprises a first apparatus and a second apparatus, the first apparatus is configured to perform the method according to any one of claims 1 to 11, and the second apparatus is configured to perform the method according to any one of claims 12 to 26.

31. A computer-readable storage medium, wherein the computer-readable storage medium is configured to store a computer program, and when the computer program is run on a computer, the computer is enabled to perform the method according to any one of claims 1 to 11, or perform the method according to any one of claims 12 to 26.

32. A computer program product, wherein the computer program product comprises computer program code, and when the computer program code is run, the method according to any one of claims 1 to 11 is implemented, or the method according to any one of claims 12 to 26 is implemented.
